# EUROPEAN PATENT APPLICATION

(11) **EP 2 878 417 A1**
(43) Date of publication of application: **03.06.2015**
(21) Application number: 13822264.1
(22) Date of filing: 18.07.2013
(51) Int. Cl.: B28B 13/04

(54) **GREEN-HONEYCOMB-MOLDED-BODY HOLDER AND METHOD FOR PRODUCING DIESEL PARTICULATE FILTER**

(30) Priority: 27.07.2012 JP 2012167461; 27.07.2012 JP 2012167467; 31.10.2012 JP 2012241062
(71) Applicant: Sumitomo Chemical Company, Limited, Tokyo 104-8260 (JP)
(72) Inventor: KOIDE, Nobuyuki, Niihama-shi Ehime 792-8521 (JP); MATSUDA, Masato, Niihama-shi Ehime 792-8521 (JP); SAITO, Hirofumi, Niihama-shi Ehime 792-8521 (JP); GOTO, Akinori, Niihama-shi Ehime 792-8521 (JP); TSUCHIMOTO, Kazuya, Niihama-shi Ehime 792-8521 (JP)
(74) Representative: Vossius & Partner Patentanwälte Rechtsanwälte mbB
(86) International application number: PCT/JP2013/069529
(87) International publication number: WO 2014/017379

(57) **Abstract**

Provided is a green-honeycomb molded body holder which can suppress a decrease in the dimension accuracy of a green-honeycomb molded body. Provided is a green-honeycomb molded body holder 1G for supporting a side surface of an extruded cylindrical green-honeycomb molded body with the longitudinal direction of the green-honeycomb molded body horizontal, the holder 1G comprises flexible body sections 83a, 83b, the body section 83b has, in an upper section of the body section 83b, a groove 87 that supports a side surface of the green-honeycomb molded body, and a cavity 80 is formed below the groove 87 of the body section 83b.

## Description

### Technical Field

The present invention relates to a green-honeycomb molded body holder and a method for producing a diesel particulate filter.

### Background Art

Green-honeycomb molded bodies are intermediates in the production of honeycomb structures for use in diesel particulate filters etc., and produced by extruding pastes containing ceramic raw material powders (see, for example, Patent Literature 1). More precisely, the green-honeycomb molded body means a honeycomb structure before firing (raw honeycomb structure).

Cylindrical green-honeycomb molded bodies extruded in horizontal direction from extruders are supported by holders with side surfaces of the bodies kept horizontal, cut into desired lengths, and transferred to the next step with the bodies supported by the holders. Body sections of the holders are provided with grooves in accordance with the cylindrical shapes, in order to support the green-honeycomb molded bodies. The transferred green-honeycomb molded bodies undergo steps such as drying and firing to serve as ceramic honeycomb structures.

### Citation List

### Patent Literature

[Patent Literature 1] Japanese Patent No. 4099896

### Summary of Invention

### Technical Problem

With the green-honeycomb molded bodies supported by the holders, there are clearances (gaps) between the grooves of the holders and the side surfaces of the green-honeycomb molded bodies. When the clearance is large, the unfired and undried green-honeycomb molded body is collapsed in the direction of gravitational force to spread in the horizontal direction due to its own weight while being supported by the holder, and the cross section of the body is made into an elliptically flattened shape. This causes the dimension accuracy of the green-honeycomb molded body to be decreased.

Therefore, an object of the present invention is to provide a green-honeycomb molded body holder which can suppress a decrease in the dimension accuracy of a green-honeycomb molded body, and a method for producing a diesel particulate filter.

### Solution to Problem

A green-honeycomb molded body according to an aspect of the present invention is a green-honeycomb molded body holder for supporting a side surface of an extruded cylindrical green-honeycomb molded body with a longitudinal direction (central axis) of the green-honeycomb molded body horizontal, where the holder comprises a flexible body section, the body section has a groove that supports the side surface of the green-honeycomb molded body, and a cavity is formed below the groove of the body section.

In the case of the green-honeycomb molded body according to an aspect of the present invention, when the green-honeycomb molded body is supported by the groove in an upper section of the body section, the cavity below the groove is collapsed in the vertical direction, and accordingly, the shape of the flexible body section is changed to reduce the clearance between the groove and the side surface of the green-honeycomb molded body. More precisely, the space will be narrowed in which the green-honeycomb molded body can spread in the horizontal direction. Therefore, according to the present invention, the deformation (strain) of the green-honeycomb molded body is suppressed, thereby preventing the circular cross section of the molded body from being made into an elliptically flattened shape with the central axis of the green-honeycomb molded body kept horizontal. Accordingly, according to the present invention, the decrease in the dimension accuracy of the green-honeycomb molded body can be suppressed.

In the green-honeycomb molded body according to an aspect of the present invention, it is preferable that the groove has a curved section on which a lower half the side surface of the green-honeycomb molded body abuts, and a pair of side sections that extend upward from both edges of the curved section in the curve direction. This makes edges of the groove in the longitudinal direction unlikely to come into contact with the side surface of the green-honeycomb molded body, and the side surface of the green-honeycomb molded body can be prevented from being damaged by contact with the edges of the groove, when the body section is deformed so as to reduce the clearance.

In a first aspect of the present invention, it is preferable that the cavity penetrate through the body section in a direction in which the groove extends, cross-sectional shapes of the groove and of the cavity in a vertical plane orthogonal to the direction in which the groove and the cavity extend be axisymmetric with respect to a vertical symmetry axis common to both the groove and the cavity, the cross-sectional shape of the cavity in the vertical plane has a pair of sides at least partially horizontal and parallel to each other, at least an upper side of the pair of the sides have slope parts sloped upward on both aspects of the upper side, and a horizontal distance between both ends of the upper side be longer than a width of the groove in the vertical plane.

When the cavity penetrates through the body section, and when the groove and the cavity have the symmetry mentioned above, the clearance is reduced evenly in the case of deforming the shape of the body section supporting the green-honeycomb molded body, and the decrease in the dimension accuracy of the green-honeycomb molded body is thus suppressed in a balanced manner. In addition, with the cross-sectional shape of the cavity according to the aspect mentioned above, the clearance is moderately reduced with the shape change of the body section. More specifically, because the horizontal distance between the both ends of the upper side in the cross-sectional shape is longer than the width of the groove, the body section is easily deformed so that the groove wraps around the side surface of the green-honeycomb molded body, when the green-honeycomb molded body is supported. In this case, the cross-sectional shape of the cavity has the pair of sides at least partially horizontal and parallel to each other, the wrapping degree is thus not excessive, and the clearance is moderately reduced.

In a second aspect of the present invention, the cavity may penetrate through the body section in a direction in which the groove extends, cross-sectional shapes of the groove and of the cavity in a vertical plane orthogonal to the direction in which the groove and the cavity extend may be axisymmetric with respect to a vertical symmetry axis common to both the groove and the cavity, the cross-sectional shape of the cavity in the vertical plane may be a shape comprising lines at least following vertexes of an imaginary trapezoidal shape with an upper side shorter than a lower side, and a length of the lower side equal to or smaller than a width of the groove in the vertical plane, and, among the lines, the line following the vertexes on the upper side aspect may intersect the symmetry axis in a position below the positions of the vertexes on the upper side aspect, and comprise a slope part sloped downward from the vertex aspect toward the symmetry axis aspect.

When the cavity penetrates through the body section, and when the groove and the cavity have the symmetry mentioned above, the clearance is reduced evenly in the case of deforming the shape of the body section supporting the green-honeycomb molded body, and the decrease in the dimension accuracy of the green-honeycomb molded body is thus suppressed in a balanced manner. In addition, with the cross-sectional shape of the cavity according to the aspect mentioned above, the side surface of the green-honeycomb molded body can be prevented from being damaged by contact with edges of the grooves. More specifically, because the cross-sectional shape is a shape composed of the lines at least following the vertexes of the imaginary trapezoidal shape with the upper side shorter than the lower side, and the length of the lower side equal to or smaller than the width of the groove, the body section is deformed so that the groove wraps around the side surface of the green-honeycomb molded body, when the green-honeycomb molded body is supported. In this second aspect, the green-honeycomb molded body is less likely to be wrapped by the body section, as compared with a case in which the cross-sectional shape has a pair of sides at least partially horizontal and parallel to each other. However, in the cross-sectional shape of the cavity of the second aspect, among the lines, the line following the vertexes on the upper side aspect intersects the symmetry axis in a position below the positions of the vertexes on the upper side aspect, and the body section can thus wrap around the green-honeycomb molded body to such an extent that the deformation of the green-honeycomb molded body can be suppressed.

In a third aspect of the present invention, the cavity may penetrate through the body section in a direction in which the groove extends, the cross-sectional shapes of the groove and of the cavity in a vertical plane orthogonal to the direction in which the groove and the cavity extend may be axisymmetric with respect to a vertical symmetry axis common to both the groove and the cavity, the cross-sectional shape of the cavity in the vertical plane may be a shape comprising lines at least following vertexes of an imaginary rectangle shape, with lengths of an upper side and of a lower side in a horizontal direction longer than a width of the groove in the vertical plane, and, among the lines, the line following the vertexes on the upper side aspect may intersect the symmetry axis in a position below the positions of the vertexes on the upper side aspect, and comprise two or more pairs of downward slope parts sloped downward from the vertex aspect toward the symmetry axis aspect; and an upward slope part sloped upward from the vertex aspect toward the symmetry axis aspect between the downward slope parts.

When the cavity penetrates through the body section, and when the groove and the cavity have the symmetry mentioned above, the clearance is reduced evenly in the case of deforming the shape of the body section supporting the green-honeycomb molded body, and the decrease in the dimension accuracy of the green-honeycomb molded body is thus suppressed in a balanced manner. In addition, with the cross-sectional shape of the cavity according to the aspect mentioned above, the clearance is reduced significantly with the shape change of the body section. More specifically, because the cross-sectional shape is a shape composed of the lines at least following the vertexes of an imaginary rectangle shape, with the lengths of the upper side and lower side in a horizontal direction longer than the width of the groove in the vertical plane, the body section is easily deformed so that the groove wraps around the side surface of the green-honeycomb molded body, when the green-honeycomb molded body is supported. In this case, among the lines, the line following the vertexes on the upper side aspect intersects the symmetry axis in a position below the positions of the vertexes on the upper side aspect, the wrapping degree is thus increased, and the clearance is reduced significantly.

In a fourth aspect of the present invention, the curved section of the groove is semicircular when viewed from the direction in which the groove extends, the cavity is located below the entire curved section, and penetrates through the body section in the direction in which the groove extends, the cavity is surrounded by a horizontal bottom surface, a top surface opposed to the bottom surface, and a pair of vertical side surfaces opposed, and at the top surface, both ends parallel to the direction in which the groove extends are bent toward the curved section. Also in the fourth aspect, the deformation of the green-honeycomb molded body is suppressed, and the decrease in the dimension accuracy thereof can be suppressed.

In a fifth aspect of the present invention, the curved section of the groove is semicircular when viewed from the direction in which the groove extends, the cavity penetrates through the body section in the direction in which the groove extends, a bottom surface of the cavity and a top surface of the cavity, which is opposed to the bottom surface, are curved surfaces curved along the entire curved section, and, the cavity is surrounded by only the two curved surfaces of the bottom surface and the top surface. According to the fifth aspect, the deformation of the green-honeycomb molded body is easily suppressed, and the dimension accuracy of the green-honeycomb molded body is easily improved, as compared with the aspects mentioned above. It is preferable that the thickness of the body section be uniform between the curved section and the top surface in the fifth aspect. This further makes it easier to suppress the deformation of the green-honeycomb molded body.

The green-honeycomb molded body holder according to an aspect of the present invention may comprise a inside-attached section covering a surface of the groove. The inside-attached section has flexibility and includes a material that is higher in flexibility than the body section. The groove supports the side surface of the green-honeycomb molded body via the inside-attached section.

Because the inside-attached section includes a material that is higher in flexibility than the body section, a terminal end of the groove of the holder is prevented from digging into the side surface of the green-honeycomb molded body. On the other hand, the transportability is maintained by the rigidity of the body section including a material that is lower in flexibility than the inside-attached section. Accordingly, the green-honeycomb molded body holder has the inside-attached section, thereby making it possible to prevent the side surface of the green-honeycomb molded body from damaged along the circumferential direction while maintaining the transportability.

It is preferable that the thickness of the inside-attached section be 0.05 to 0.2 times as large as a radius of a circular cross section of the green-honeycomb molded body. This makes it easy to prevent the side surface of the green-honeycomb molded body from being damaged.

It is preferable that the inside-attached section includes a material that is lower in hardness than the body section. In addition, it is preferable the inside-attached section includes a material that is lower in impact resilience than the body section. This makes it easy to prevent the side surface of the green-honeycomb molded body from being damaged.

A method for producing a diesel particulate filter according to an aspect of the present invention is a production method with the use of the green-honeycomb molded body holder mentioned above, the method comprising: a step of forming a long cylindrical body by extruding a mixture containing a ceramic raw material powder in a horizontal direction from an extruder; a step of supporting a lower side surface of the cylindrical body by the groove of the green-honeycomb molded body holder, and cutting the cylindrical body perpendicular to the longitudinal direction of the cylindrical body to form the green-honeycomb molded body supported by the green-honeycomb molded body holder; and a step of transferring the green-honeycomb molded body supported by the green-honeycomb molded body holder, along with the green-honeycomb molded body holder. The production method according to the present invention makes it possible to suppress the deformation of the green-honeycomb molded body, thereby improving the dimension accuracy of the body. Furthermore, the production method with the use of the holder comprising the inside-attached section not only allows the deformation of the green-honeycomb molded body to be suppressed, but also maintains the transportability, and prevents the side surface of the green-honeycomb molded body from being damaged along the circumferential direction, thereby allowing for the production of a diesel particulate filter with little damage without strain.

### Advantageous Effects of Invention

According to the present invention, a green-honeycomb molded body holder which can suppress a decrease in the dimension accuracy of a green-honeycomb molded body, and a method for producing a diesel particulate filter can be provided.

### Brief Description of Drawings

FIG. 1 is a cross sectional view perpendicular to a direction in which a groove extends, in a first aspect of a green-honeycomb molded body holder according to the present invention.
FIG. 2 is a cross sectional view perpendicular to a direction in which a groove of a conventional holder extends, which shows a function of the conventional holder.
FIG. 3 is a cross sectional view perpendicular to the direction in which a groove of a first aspect extends, which shows a function of the first aspect.
FIG. 4 is a cross sectional view perpendicular to a direction in which a groove extends, in a second aspect of a green-honeycomb molded body holder according to the present invention.
FIG 5 is a cross sectional view of a holder in a third aspect of a green-honeycomb molded body holder according to the present invention.
FIG 6(a) and FIG 6(b) are cross-sectional views perpendicular to a direction X in which a groove extends, in a fourth aspect of a green-honeycomb molded body holder according to the present invention.
FIG 7(a) is a cross-sectional view bisected by vertically cutting the green-honeycomb molded body holder in FIG 6(b) in the direction X, and FIG 7(b) is a top view as viewed from a groove aspect of the green-honeycomb molded body holder in FIG 6(b).
FIG. 8 is a side view of a green-honeycomb molded body supported by a conventional holder.
FIG. 9 is a side view of the green-honeycomb molded body after being supported by the conventional holder.
FIG 10 is a side view of a green-honeycomb molded body after being supported by a holder according to Example 3 of the present invention.
FIG 11(a) and FIG 11(b) are cross-sectional views perpendicular to a direction X in which a groove extends, in a fifth aspect of a green-honeycomb molded body holder according to the present invention.
FIG. 12(a) is a cross-sectional view bisected by vertically cutting the green-honeycomb molded body holder in FIG 11 (b) in the direction X, and FIG. 12(b) is a top view as viewed from a groove aspect of the green-honeycomb molded body holder in FIG 11(b).
FIG. 13(a) is a perspective view of a green-honeycomb molded body formed according to an embodiment of the present invention, and FIG. 13(b) is an end view of the green-honeycomb molded body in FIG. 13(a).
FIG 14(a) is a perspective view of a diesel particulate filter produced according to an embodiment of the present invention, and FIG. 14(b) is an end view of the diesel particulate filter in FIG 14(a).
FIG. 15 is a graph showing dimensions of a green-honeycomb molded body supported by a holder according to Example 2.
FIG. 16 is a graph showing dimensions of a green-honeycomb molded body supported by a holder according to Comparative Example 2.

### Description of Embodiments

A preferred embodiment of the present invention will be described below in detail with reference to the drawings. However, the present invention is not to be considered limited to the following embodiment. It is to be noted that identical or equivalent elements are denoted by the same reference numerals. In addition, although the vertical and horizontal positional relationships are as shown in the figures, the dimensional ratios are not limited to those shown in the figures.

### [Green-Honeycomb Molded Body Holder]

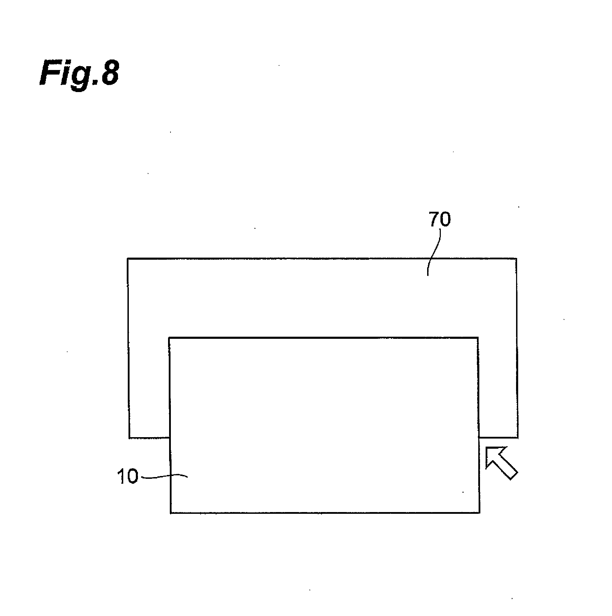

A green-honeycomb molded body holder (hereinafter, referred to as a "holder") according to the present invention is, as shown in FIG. 8 intended to support side surfaces of a cylindrical green-honeycomb molded body 70, with a longitudinal direction of the green-honeycomb molded body 70 horizontal. The green-honeycomb molded body is an intermediate in the production of a honeycomb structure for use in diesel particulate filters, and the like. The green-honeycomb molded body is formed by extruding a paste-like mixture containing a ceramic raw material powder, and thus soft, easily damaged, and easily deformed. It is to be noted that the longitudinal direction of the green-honeycomb molded body 70 is restated as the direction of an axis (central axis) that passes through the center of a circular cross section of the cylindrical green-honeycomb molded body 70.

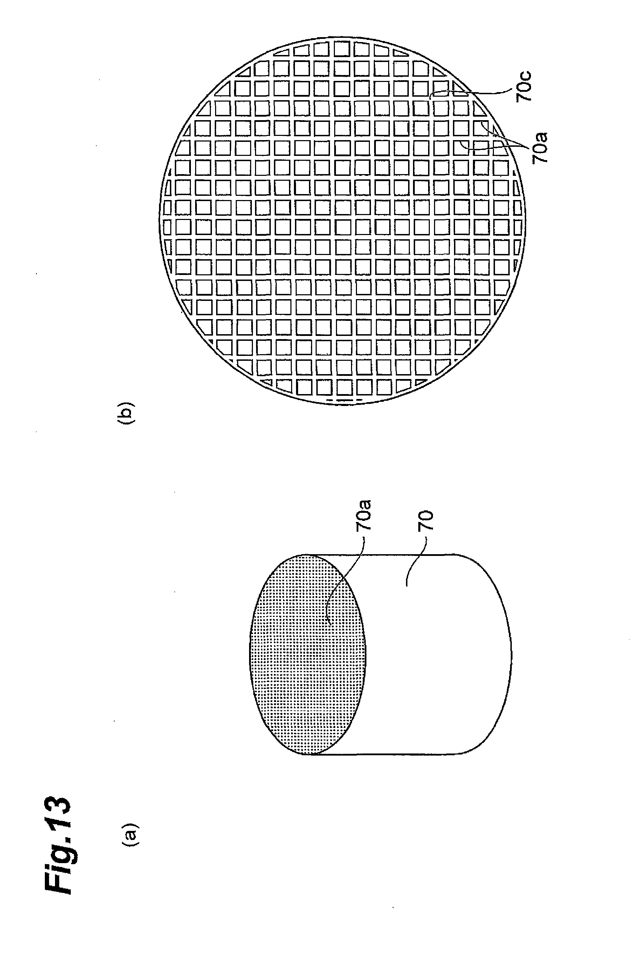

As shown in FIG. 13(a) and FIG. 13(b), the green-honeycomb molded body 70 has a plurality of partition walls 70c parallel to the central axis. More specifically, the green-honeycomb molded body 70 has a lattice structure in a cross-section perpendicular to the central axis direction. In other words, the green-honeycomb molded body 70 has a large number of through holes 70a (flow channels) formed, which extend in the same direction (central axis direction), and each through hole 70a is separated by the partition walls 70c. The plurality of through holes 70a are parallel to each other. At a first end surface of the green-honeycomb molded body 70 and a second end surface thereof opposite to the first end surface, openings of each through hole are located. Each through hole 70a is perpendicular to the both end surfaces of the green-honeycomb molded body 70. The angles made by the respective partition walls 70c therebetween is not particularly limited, and may be 90°, or may be 120°. When cross-sections of the through holes are square, the length of a side of the square may be, for example, 0.8 to 2.5 mm.

The length of the side surface in the direction in which the through holes of the green-honeycomb molded body 70 extend is not particularly limited, but can be, for example, 30 to 350 mm. In addition, the outside diameter of the green-honeycomb molded body 70 is also not particularly limited, but can be, for example, 10 to 320 mm. The outside diameter of the green-honeycomb molded body 70 may be 140 to 180 mm, or may be 150 to 170 mm.

### (First Aspect of Green-Honeycomb Molded Body Holder)

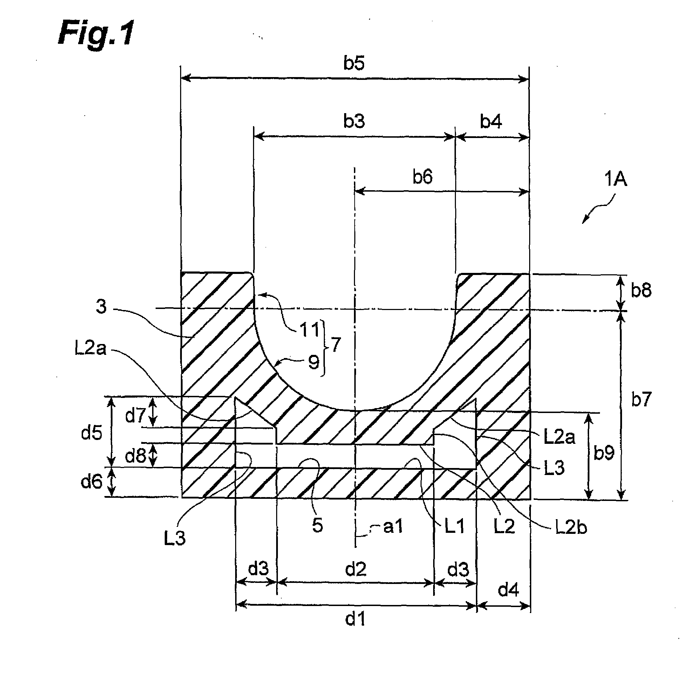

FIG. 1 is cross-sectional view of a first aspect (holder 1A) of the holder according to the present invention. As shown in FIG. 1, the holder 1A comprises a body section 3 includes a material such as a flexible rubber or sponge. The flexibility refers to a property that can cause bending or deflection. The body section 3 has, in an upper section thereof, a groove 7 for supporting side surfaces of a green-honeycomb molded body 70, and has a cavity 5 below the groove 7.

The groove 7 is a depression provided in the upper section of the body section 3, and extends in a frontward and rearward direction on the page of FIG 1. The groove 7 has: a curved section 9 on which a lower half side surface of the green-honeycomb molded body 70 abuts in the case of supporting the green-honeycomb molded body 70 which is cylindrical in shape; and side sections 11 that extend upward from both edges of the curved section 9 in a curved direction to a height b8.

The curvature of the curved section 9 is made equal to or smaller than the curvature of the cylindrical shape of the green-honeycomb molded body so that the side surface of the green-honeycomb molded body 70 abuts on the deepest part of the groove 7. The width of an upper end of the groove 7, that is, the distance between the edges of the side sections 11 is made longer than the diameter of the green-honeycomb molded body 70 so that the green-honeycomb molded body 70 can go into the groove 7 without coming into contact with the edges of the side sections 11 with the longitudinal direction of the body section 70 horizontal.

The cavity 5 penetrates through the body section 3 in the direction in which the groove 7 extends. The cross-sectional shapes of the groove 7 and the cavity 5 (that is, the cross-sectional shapes in the vertical plane orthogonal to the direction in which the groove 7 and the cavity 5 extend) in FIG. 1 are axisymmetric with respect to a vertical symmetry axis a1 common to both the groove 7 and the cavity 5.

The cross-sectional shape of the cavity 5 in the vertical plane has a lower side L1 and an upper side L2 that are a pair of sides partially horizontal and parallel to each other, the upper side L2 of which has a pair of slope parts L2a sloped upward on both aspects of the upper side L2. The lowermost parts of the pair of slope parts L2a each extend vertically downward to form a pair of vertical parts L2b and meet to both ends of the horizontal part of the upper side L2. In addition, the uppermost parts of the pair of slope parts L2a, that is, both ends of the upper side L2 each extend vertically downward to form a pair of lateral sides L3 and meet to both ends of the lower side L1. The horizontal distance d1 between the both ends of the upper side L2 (the horizontal distance between the both ends of the lower side L1) herein is longer than a width b3 of the groove 7 in the same vertical plane.

In the cross-sectional view of the holder 1A shown in FIG 1, reference numeral b3 denotes the width of the groove 7, reference numeral b4 denotes the width of the side section 11, reference numeral b5 denotes the width of the holder 1A, reference numeral b6 denotes a length of half the width of the holder 1A, reference numeral b7 denotes the height of the holder 1 A to the top of the curved section 9, reference numeral b8 denotes the height of the side section 11, and reference numeral b9 denotes the height of the holder 1A to the deepest part of the groove 7. Furthermore, in the same figure, reference numeral d1 denotes the length of the lower side L1 of the cavity 5, reference numeral d2 denotes the length of the horizontal section of the upper side L2 of the cavity 5, reference numeral d3 denotes the horizontal lengths of the slope parts L2a of the cavity 5, reference numeral d4 denotes the distances between the lateral sides L3 of the cavity 5 and the side surfaces of the body section 3, reference numeral d5 denotes the lengths of the lateral sides L3 of the cavity 5, reference numeral d6 denotes the distance between the lower side L1 of the cavity and the bottom surface of the body section, reference numeral d7 denotes the vertical lengths of the slope parts L2a of the cavity 5, and reference numeral d8 denotes the distance between the horizontal section of the upper side L2 of the cavity 5 and the lower side L1.

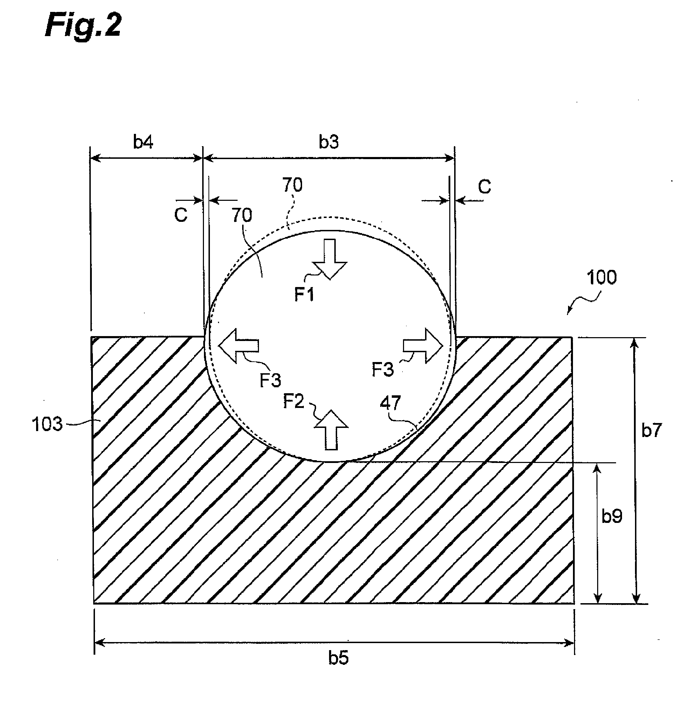

Now, the functions and effects of the holder 1A will be described. FIG 2 is a cross-sectional view perpendicular to a direction in which a groove of a conventional holder extends. In the conventional holder without having any cavity, as shown in FIG. 2, in a condition with a green-honeycomb molded body (dashed line) 70 supported by a holder 100, there is a clearance C between a groove 47 of the holder 100 and a side surface of the green-honeycomb molded body (dashed line) 70. Internal stress F3 which attempts to spread in the horizontal direction is exerted on the undried and unfired green-honeycomb molded body (dashed line) 70 in response to its own weight (gravity) F1 and a repulsion force F2 from a body section 103 of the flexible holder 100, while waiting for the next processing step with the molded body supported by the holder 100. Because there is the clearance C in the direction of the internal stress F3, the green-honeycomb molded body (dashed line) 70 is collapsed in the direction of gravitational force to spread in the horizontal direction, thereby resulting in an elliptically flattened shape (solid line). This causes the dimension accuracy of the green-honeycomb molded body 70 to be decreased.

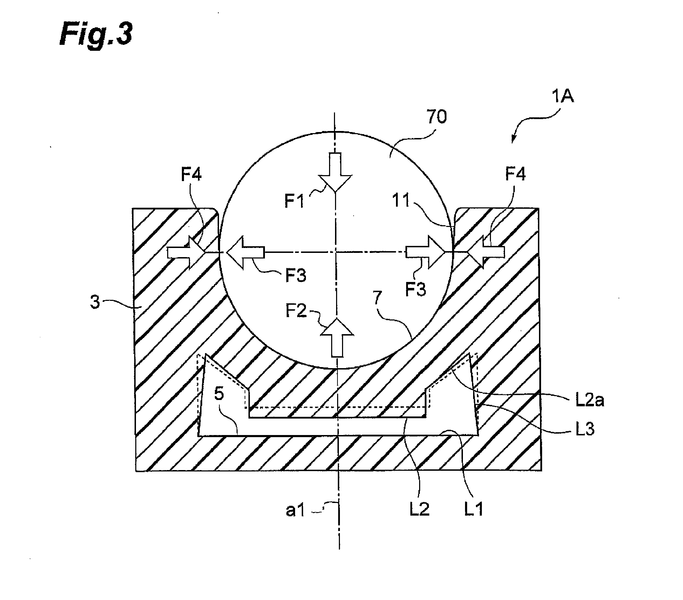

In contrast, as shown in FIG 3, in the holder 1A, the cavity 5 is collapsed in the vertical direction when the green-honeycomb molded body 70 is supported. More specifically, because the horizontal distance d1 between the both ends of the upper side L2 is longer than the width b3 of the groove 7, the upper side L2 descends downward, the body section 3 is deformed so that the pairs of slope parts L2a and lateral sides L3 are sloped toward the symmetry axis a1, and the entire cavity 5 is made into a shape collapsed in the vertical direction. More precisely, at the groove 7, the side section 11 and parts of the curved section 9 are sloped toward the symmetry axis a1, and the entire upper section of the body section 3 is deformed so as to wrap around the side surface of the green-honeycomb molded body 70. In this case, the cross-sectional shape of the cavity 5 has the lower side L1 and upper side L2 at least partially horizontal and parallel to each other. Therefore, the wrapping degree by the body section 3 is not excessive.

This shape change of the entire body section 3 reduces the clearance between the groove 7 and the side surface of the green-honeycomb molded body 70, and further causes the surface of the groove 7 to abut on the green-honeycomb molded body 70. Then, a repulsion force F4 from the abutting groove 7 acts against the internal stress F3 which attempts to spread the green-honeycomb molded body 70 in the horizontal direction, thereby suppressing the spread of the green-honeycomb molded body 70 in the horizontal direction.

This function narrows the space in which the green-honeycomb molded body 70 can spread in the horizontal direction, when the holder 1A supports the green-honeycomb molded body 70, thus preventing the green-honeycomb molded body from being made into an elliptically flattened shape. Accordingly, the holder 1A can suppress a decrease in the dimension accuracy of the green-honeycomb molded body 70.

In addition, in the holder 1A, the groove 7 has the side section 11. Therefore, when the holder 1A supports the green-honeycomb molded body 70 to change the shape of the body section 3, the edges of the groove 7 will not come into contact with the side surface of the green-honeycomb molded body 70. Accordingly, the side surface of the green-honeycomb molded body 70 is prevented from being damaged by contact with the edges of the groove 7.

Furthermore, in the holder 1A, the cavity 5 penetrates through the body section 3 in the direction in which the groove 7 extends, and the cross-sectional shapes of the groove 7 and the cavity 5 have the vertical symmetry axis a1 common to both the groove 7 and the cavity 5. Therefore, the clearance is reduced evenly over the entire body section 3, and the decrease in the dimension accuracy of the green-honeycomb molded body 70 is suppressed in a balanced manner.

### (Second Aspect of Green-Honeycomb Molded Body Holder)

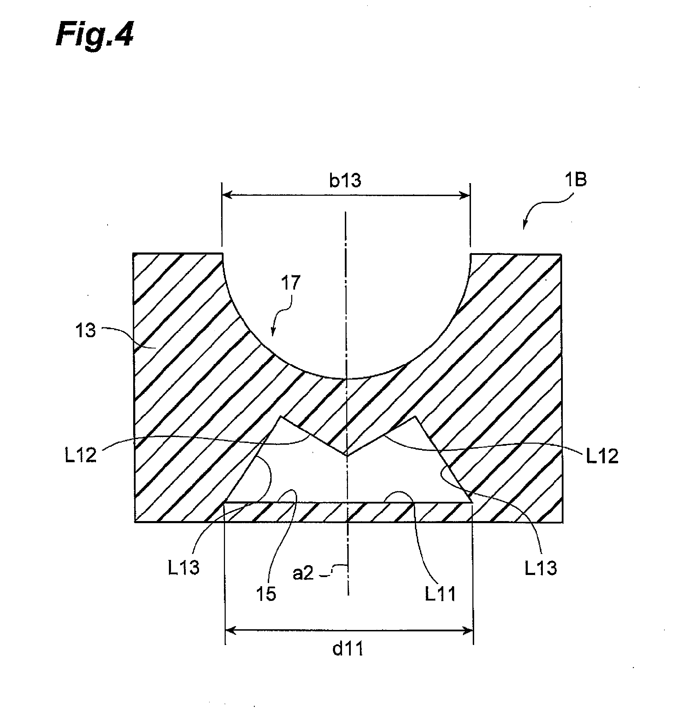

FIG 4 is cross-sectional view of a second aspect (holder 1B) of the holder according to the present invention. The holder 1B differs from the first aspect (holder 1A) in that the groove has no side section, and that the cavity is different in cross-sectional shape.

The cross-sectional shapes of a groove 17 and a cavity 15 (that is, the cross-sectional shapes in the vertical plane orthogonal to the direction in which the groove 17 and the cavity 15 extend) of the holder 1B are axisymmetric with respect to a vertical symmetry axis a2 common to both the groove 17 and the cavity 15.

The cross-sectional shape of the cavity 15 in the vertical plane is composed of a horizontal lower side L11, a pair of lateral sides L13 extending upward at sharp angles respectively from both ends of the lower side 11, and upper side L12 connecting upper ends of the pair of lateral sides L13 to each other. The upper side 12 extend while sloping downward toward the symmetry axis a2 respectively from the upper ends of the pair of lateral sides L 13, and meet to each other on the symmetry axis a2.

In other words, the cross-sectional shape of the cavity in the vertical plane is a shape comprising lines following vertexes of an imaginary trapezoidal shape with an upper side shorter than a lower side. Among the lines, the lower side and the pair of lateral sides follow the shape of the trapezoidal shape as is. Further, the line following the vertexes on the upper side aspect bends at the midpoint of the line, and intersects the symmetry axis a2 in a position below the positions of the vertexes on the upper side aspect. More particularly, the line mentioned above comprises the upper side L12 which are a pair of slope sections sloped downward from the vertex aspect on the upper side aspect toward the symmetry axis.

The length of the lower side d11 herein is equal to or shorter than the width of the width b 13 of the groove 17.

In the holder 1B, the cavity 15 has the cross-sectional shape mentioned above, and the collapse degree of the cavity 15 in the case of supporting the green-honeycomb molded body 70 is thus small as compared with the first aspect (holder 1A). More specifically, in the holder 1B in which the upper side L12 is shorter than the lower side L11 and the length of the lower side L11 is equal to or smaller than the width b13 of the groove 17, when the body section 13 is deformed so that the groove 17 wraps around the side surface of the green-honeycomb molded body, the wrapping degree is small as compared with the holder 1A. On the other hand, the intersection of the pair of upper side L12 with each other overlaps with the symmetry axis a2 in a position below the positions of the upper ends of the lateral sides L 13, and the wrapping is thus ensured to a degree. Further, the change in shape is also small as the entire body section 13, and the degree of clearance reduction is also small. Accordingly, the side surface of the green-honeycomb molded body 70 can be prevented from being damaged by contact with edges of the groove 17.

### (Third Aspect of Green-Honeycomb Molded Body Holder)

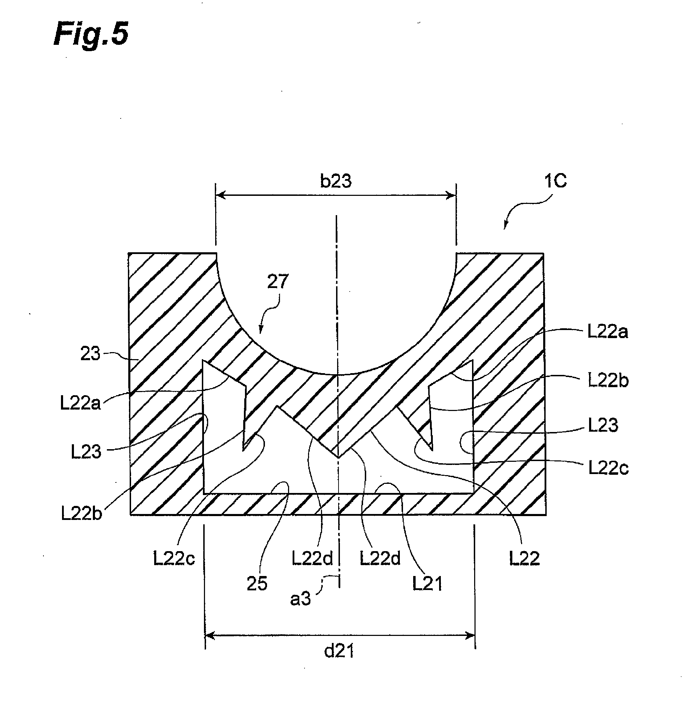

FIG. 5 is cross-sectional view of a third aspect (holder 1C) of the holder according to the present invention. The holder 1C differs from the first aspect (holder 1A) in that the groove has no side section, and that the cavity is different in cross-sectional shape.

The cross-sectional shapes of a groove 27 and a cavity 25 (that is, the cross-sectional shapes in the vertical plane orthogonal to the direction in which the groove 27 and the cavity 25 extend) of the holder 1C are axisymmetric with respect to a vertical symmetry axis a3 common to both the groove 27 and the cavity 25.

The cross-sectional shape of the cavity 25 in the vertical plane is composed of a horizontal lower side L21, a pair of lateral sides L23 rising upward respectively at right angles from both ends of the lower side 21, and an upper side L22 connecting upper ends of the pair of lateral sides L23 to each other. The upper side L22 is composed of: each in the order from the upper ends of the pair of sides L23, first downward slope parts L22a sloped downward toward the symmetry axis a3; second downward slope parts L22b sloped downward at steeper angles than L22a from the first downward slope parts L22a; upward slope parts L22c sloped upward from the second downward slope parts L22b; and third downward slope parts L22d sloped downward from the upward slope parts L22c, and the third downward slope parts L22d meet to each other on the symmetry axis a3.

In other words, the cross-sectional shape of the cavity 25 in the vertical plane is a shape comprising lines at least following vertexes of an imaginary rectangle shape. Among the lines, the lower side and the pair of lateral sides follow the shape of the rectangle shape as is. Further, the line following the vertexes on upper side aspect intersects the symmetry axis in a position below the positions of the vertexes on the upper side aspect. Further, the line comprises: two or more pairs of downward slope parts sloped downward from the vertex aspect toward the symmetry axis a3; and upward slope parts sloped upward from the vertex aspect toward the symmetry axis a3 between the downward slope parts.

The length of the lower side d21 herein is longer than the width of the width b23 of the groove 27.

In the holder 1C, the cavity 25 has the cross-sectional shape mentioned above, and the collapse degree of the cavity 25 in the case of supporting the green-honeycomb molded body 70 is thus large as compared with the first aspect (holder 1A). More specifically, in the holder 1C in which the length of the lower side L21 is longer than the width b23 of the groove 27, a body section 23 is easily deformed so that the groove 27 wraps around the side surface of the green-honeycomb molded body 70. Further, because the third downward slope parts L22d intersect the symmetry axis a3 in a position below the positions of the upper ends of the lateral sides L23, the change in shape is also large as the entire body section 23, and the degree of clearance reduction is also large. Accordingly, the reduction in clearance due to the shape change of the body section is more significant, and the decrease in the dimension accuracy of the green-honeycomb molded body 70 can be further suppressed.

### (Fourth Aspect of Green-Honeycomb Molded Body Holder)

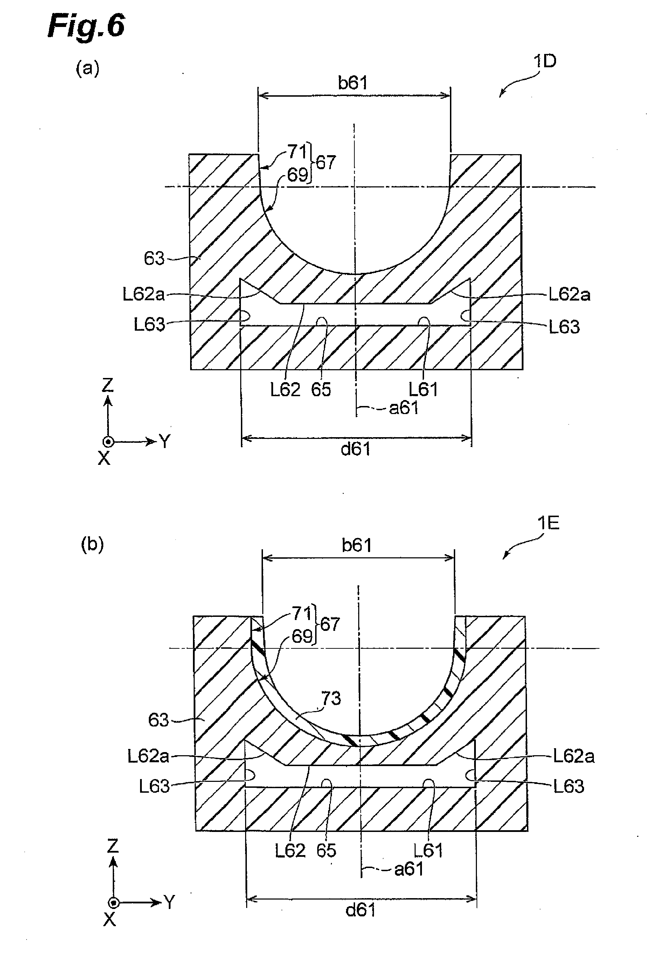

A fourth aspect (a holder 1D and a holder 1E) of the green-honeycomb molded body holder according to the present invention will be described below. As shown in FIG 6(a), the holder 1D comprises a body section 63 including a flexible material. The body section 63 has, in an upper section thereof, a groove 67, and a cavity 65 below the groove 67.

The groove 67 is a depression provided in the upper section of the body section 63, and extends in a frontward and rearward direction X on the page of FIG 6(a). The groove 67 has: a curved section 69 in which a lower half side surface of the green-honeycomb molded body 70 is housed in the case of supporting the green-honeycomb molded body 70 which is cylindrical in shape; and side sections 71 that extend upward from both edges of the curved section 69. It is to be noted that the both edges of the curved section 69 are restated as both ends parallel to a direction X in which the groove 67 extends in the curved section 69. The curvature of the curved section 69 is equal to or smaller than the curvature of the cylindrical shape of the green-honeycomb molded body.

The width b61 of the groove 67 is larger than the diameter of the green-honeycomb molded body 70. Therefore, with the longitudinal direction of the green-honeycomb molded body 70 horizontal, the green-honeycomb molded body 70 is allowed to go into the groove without bringing the green-honeycomb molded body 70 into contact with edges of the groove 67. The green-honeycomb molded body 70 has direct contact with the groove 67. In other words, the groove 67 of the holder 1D supports the green-honeycomb molded body 70.

The cavity 65 penetrates through the body section 63 in the direction X in which the groove 67 extends. The cross-sectional shape of the groove 67 (a cross section orthogonal to the direction X in which the groove 67 extends) in FIG. 6(a) is axisymmetric with respect to an axis a61 extending in a vertical direction Z in the center of the cross section. The cross-sectional shape of the cavity 65 (a cross section orthogonal to the direction X in which the cavity 65 extends) in FIG. 6(a) axisymmetric with respect to the axis a61 mentioned above.

The cross-sectional shape of the cavity 65 in the vertical plane mentioned above has a lower side L61 and an upper side L62 that are a pair of sides partially horizontal and parallel to each other. The upper side L62 has a pair of slope parts L62a sloped upward on both sides of the upper side L62. The lowermost parts of the pair of slope parts L62a meet to both ends of the horizontal part of the upper side L62. Furthermore, the uppermost parts of the pair of slope parts L62a, that is, both ends of the upper side L62 each extend vertically downward to form a pair of lateral sides L63 and meet to both ends of the lower side L61. The horizontal distance d61 between the both ends of the upper side L62 (the horizontal distance between the both ends of the lower side L61) herein is longer than the width b61 of the groove 67.

The holder 1D mentioned above is restated as follows. In the holder 1D, the curved section 69 of the groove 67 is semicircular when viewed from the direction X in which the groove extends. The body section 63 has the cavity 65 formed. The cavity 65 is located below the entire curved section 69, and penetrates through the body section 63 in the direction X in which the groove 67 extends. The cavity 65 is surrounded by a horizontal bottom surface (a surface including the lower side L61), a top surface (a surface including the upper side L62) opposed to the bottom surface, and a pair of opposed vertical side surfaces (surfaces including the lateral sides L63). At the top surface, both ends (including the slope parts L62a) parallel to the direction X in which the groove extends is bent toward the curved section 69. The cavity 65 is plane-symmetric with respect to a plane (a plane including the axis a61) bisecting the groove 67 in the direction X in which the groove 67 extends. The width d61 of the bottom surface of the cavity 65 in the horizontal direction (a direction Y horizontal and perpendicular to the direction X) is longer than the width b61 of the groove 67 in the same direction.

In the holder 1D, the cavity 65 is collapsed in the vertical direction when the green-honeycomb molded body 70 is supported. More specifically, the upper side L62 descends downward. In this case, because the horizontal distance d61 between the both ends of the upper side L62 is longer than the width b61 of the groove 67, the pair of slope parts L62a and lateral sides L63 are sloped toward the symmetry axis a61, and the entire cavity 65 is collapsed in the vertical direction. Accordingly, the flexible body section 63 is deformed. More precisely, at the groove 67, the side section 71 and parts of the curved section 69 are sloped toward the symmetry axis a61, and the entire upper section of the body section 63 is deformed so as to wrap around the side surface of the green-honeycomb molded body 70. In this case, the cross-sectional shape of the cavity 65 has the lower side L61 and upper side L62 at least partially horizontal and parallel to each other, and the wrapping degree is thus not excessive.

This deformation of the entire body section 63 reduces the gap between the groove 67 and the side surface of the green-honeycomb molded body 70, and the surface of the groove 67 abuts on the green-honeycomb molded body 70. Then, a repulsion force from the abutting groove 67 acts against internal stress which attempts to spread the green-honeycomb molded body 70 in the horizontal direction due to the gravity. This suppresses the spread of the green-honeycomb molded body 70 in the horizontal direction in a cross section perpendicular to the central axis.

This function narrows the space in which the green-honeycomb molded body 70 can spread in the horizontal direction, when the holder 1D supports the green-honeycomb molded body 70, thus preventing the cross section of the green-honeycomb molded body from being made into an elliptically flattened shape. Accordingly, the holder 1D improves the dimension accuracy of the green-honeycomb molded body 70, as compared with a case in which a holder including no cavity is used.

In addition, in the holder 1D, the groove 67 has the side sections 71, and thus, when the holder 1D supports the green-honeycomb molded body 70 to change the shape of the body section 63, the edges of the groove 67 will not come into contact with the side surface of the green-honeycomb molded body 70. Accordingly, the side surface of the green-honeycomb molded body 70 is prevented from being damaged by contact with edges of an inside-attached section 73.

Furthermore, in the holder 1D, the cavity 65 penetrates through the body section 63 in the direction in which the groove 67 extends, and the cross-sectional shapes of the groove 67 and the cavity 65 are each axisymmetric with respect to the axis a61. Therefore, with the deformation of the entire body section 63, the gap between the groove 67 and the side surface of the green-honeycomb molded body 70 is evenly reduced over the entire body section 63, and the dimension accuracy of the green-honeycomb molded body 70 is thus improved.

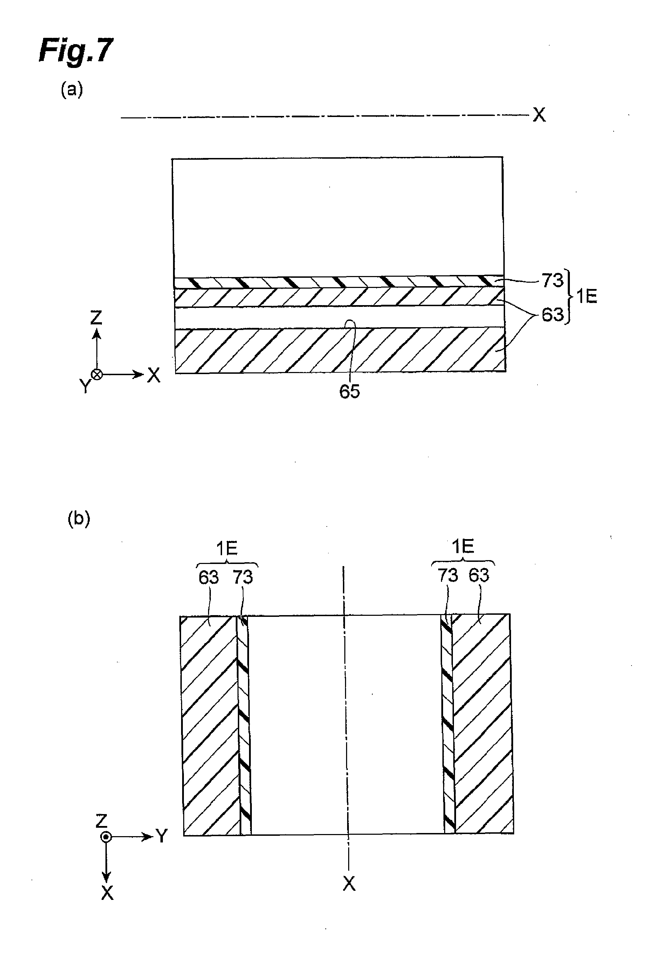

The fourth aspect of the green-honeycomb molded body holder may be provided with an inside-attached section 73 including a material that is higher in flexibility than the body section 63, as in the holder 1E shown in FIG. 6(b), FIG 7(a), and FIG. 7(b). The inside-attached section 73 of the holder 1E coats the entire surface of the groove 67. The holder 1E has the same dimensions and structure as the holder 1D described above, except for being provided with the inside-attached section 73. It is to be noted that in the holder 1E, the horizontal distance between the both ends of the upper side L62 (the horizontal distance between the both ends of the lower side L61) d61 is longer than the distance b61 between upper ends of the inside-attached section 73. In addition, the width d61 of the bottom surface of the cavity 65 in the horizontal direction (the direction Y horizontal and perpendicular to the direction X) is longer than the width b61 of the inside-attached section 73 in the same direction.

Examples of the material for the body section 63 include flexible rubbers or sponges, more specifically, include polyurethane, expanded polystyrene, or expanded polyethylene. For example, the materials Nos. 1 to 10 listed in Table 1 described below can be used as the body section 63. The body sections of the materials Nos. 1 to 10 are all composed of polyurethane. The flexibility herein refers to a property that can cause bending or deflection, and the term "high flexibility" means, for example, low 25% hardness or low impact resilience.

The entire surfaces of the curved section 69 and side section 71 of the groove 67 are covered with the sheet-like inside-attached section 73. In this case, it is preferable that the thickness of the inside-attached section 73 be 0.05 to 0.2 times as large as the radius of the green-honeycomb molded body supported.

The distance b61 between upper ends of the inside-attached section 73 is larger than the diameter of the green-honeycomb molded body 70. Therefore, with the longitudinal direction of the green-honeycomb molded body 70 horizontal, the green-honeycomb molded body 70 is allowed to go into the groove shape of the inside-attached section 73 without bringing the green-honeycomb molded body 70 into contact with edges of the inside-attached section 73. The green-honeycomb molded body 70 is brought to abut on the inside-attached section 73, and supported directly by the inside-attached section 73. In other words, the body section 63 of the holder 1E supports the green-honeycomb molded body 70 via the inside-attached section 73 covering the surface of the groove 67.

As the material of the inside-attached section 73, a material is used which is higher in flexibility than the material of the body section 63. Examples of the material of the inside-attached section 73 include, for example, soft rubbers, soft polyurethane, or silicone gel. For example, the materials Nos. 11 to 25 listed in Table 2 described below can be used as the inside-attached section 73. The inside-attached sections of the materials Nos. 11 to 25 are all composed of polyurethane.

It is preferable that the 25% hardness (hardness at a compressibility of 25%) of the body section 63 be 130 N or more, and it is preferable that the 25% hardness of the inside-attached section 73 be 100 N or less. It is to be noted that the 25% hardness is the hardness of a sample (a material constituting the body section) in the case of compressing the sample by 25% in a predetermined direction. The 25% hardness, impact resilience (%), density (kg/m³), tensile strength (kPa), elongation (%), tear strength (N/cm), compressive residual strain (%), and cyclic compressive residual strain (%) are measured on the basis of the JIS K6401 standards. In addition, it is preferable that the impact resilience of the body section 63 be 30% or more, and the impact resilience of the inside-attached section 73 be 5 to 50%. It is preferable to combine the material of the body section 63 and the material of the inside-attached section 73 such that the 25% hardness and the impact resilience fall within the ranges mentioned above. This makes it easy to suppress damage to the green-honeycomb molded body 70. Examples of the material which is applicable to the body section 63 are shown in Table 1, whereas examples of the material which is applicable to the inside-attached section 73 are shown in Table 2.

**[Table 1]**

| | Material No. | 25% Hardness (N) | Impact Resilience (%) | Density (kg/m³) | Tensile Strength (kPa) | Elongation (%) | Tear Strength (N/cm) | Compressive Residual Strain (%) | Cyclic Compressive Residual Strain (%) |
|---|---|---|---|---|---|---|---|---|---|
| Body Section | 1 | 137.2±19.6 | ≧40 | 23±2 | ≧78.4 | ≧150 | ≧4.90 | ≦5 | ≦5 |
| | 2 | 147.0±19.6 | ≧35 | 20±2 | ≧68.6 | ≧100 | ≧2.94 | ≦6 | ≦5 |
| | 3 | 176.4±19.6 | ≧30 | 20±2 | ≧98.0 | ≧100 | ≧4.90 | ≦6 | ≦5 |
| | 4 | 176.4±19.6 | ≧30 | 23±2 | ≧117.6 | ≧140 | ≧5.88 | ≦5 | ≦5 |
| | 5 | 156.8±19.6 | ≧40 | 25±2 | ≧68.6 | ≧100 | ≧1.96 | ≦5 | ≦5 |
| | 6 | 156.8±19.6 | ≧40 | 25±2 | ≧127.4 | ≧130 | ≧5.88 | ≦5 | ≦5 |
| | 7 | 156.8±19.6 | ≧40 | 28±2 | ≧78.4 | ≧100 | ≧3.92 | ≦6 | ≦5 |
| | 8 | 245.0±19.6 | ≧30 | 30±2 | ≧98.0 | ≧100 | ≧4.90 | ≦5 | ≦5 |
| | 9 | ≧0.98*¹ | ≧30 | 30±2 | ≧147.0 | ≧80 | ≧4.90 | ≦6 | ≦6 |
| | 10 | 430.0±39.2 | ≧30 | 45±3 | ≧150 | ≧80 | - | ≦5 | ≦3 |

| | | | | | | | | | |
|---|---|---|---|---|---|---|---|---|---|
| *1 measurement value without preliminary compression | | | | | | | | | |

**[Table 2]**

| Material | Material No. | 25% Hardness (N) | Impact Resilience (%) | Density (kg/m³) | Tensile Strength (kPa) | Elongation (%) | Tear Strength (N/cm) | Compressive Residual Strain (%) | Cyclic Compressive Residual Strain (%) |
|---|---|---|---|---|---|---|---|---|---|
| Inside-attached Section | 11 | 29.4±19.6 | ≦15 | 40±3 | ≧39.2 | ≧150 | ≧1.96 | ≦6 | ≦3 |
| | 12 | 58.8±19.6 | ≦20 | 50±5 | ≧68.6 | ≧130 | ≧1.96 | ≦3 | ≦3 |
| | 13 | 49.0±19.6 | ≦10 | 55±5 | ≧39.2 | ≧130 | ≧1.96 | ≦3.5 | ≦3 |
| | 14 | 39.2±19.6 | ≦10 | 65±5 | ≧29.4 | ≧150 | ≧1.96 | ≦3 | ≦93 |
| | 15 | 44.1±14.7 | ≦5 | 70±8 | ≧39.2 | ≧130 | - | ≦3 | ≦3 |
| | 16 | 39.2±19.6 | ≦20 | 70±5 | ≧29.4 | ≧150 | ≧1.96 | ≦3 | ≦3 |
| | 17 | 39.2±19.6 | ≦20 | 80±5 | ≧19.6 | ≧150 | ≧0.98 | ≦3 | ≦3 |
| | 18 | 137.2±19.6 | ≧35 | 17±1 | ≧39.2 | ≧130 | ≧1.96 | ≦6 | ≦5 |
| | 19 | 24.5±9.8 | ≧35 | 18±1 | ≧88.2 | ≧200 | ≧4.90 | ≦6 | ≦5 |
| | 20 | 137.2±19.6 | ≧40 | 18±2 | ≧49.0 | ≧130 | ≧2.94 | ≦6 | ≦5 |
| | 21 | 137.2±19.6 | ≧40 | 20±2 | ≦49.0 | ≧100 | ≧1.96 | ≦6 | ≦5 |
| | 22 | 68.6±19.6 | ≧40 | 20±2 | ≧58.8 | ≧130 | ≧1.96 | ≧6 | ≦5 |
| | 23 | 49.0±19.6 | ≧35 | 20±2 | ≧39.2 | ≧150 | ≧3.92 | ≦6 | ≦5 |
| | 24 | 34.3±9.8 | ≧35 | 22±2 | ≧49.0 | ≧200 | ≧3.92 | ≦6 | ≦5 |
| | 25 | 34.3±19.6 | ≧40 | 30±2 | ≧68.6 | ≧200 | ≧4.90 | ≦6 | ≦5 |

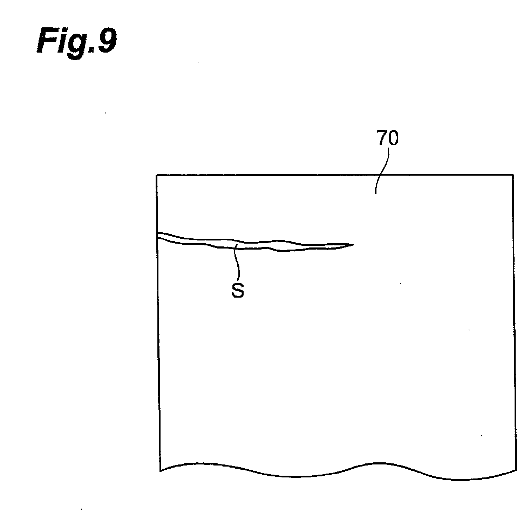

Now, the functions and effects of the holder 1E will be described. FIG. 8 is a side view of a green-honeycomb molded body supported by a conventional holder. As for a conventional holder 10, typically, as shown in FIG 8, the length of a green-honeycomb molded body 70 in the longitudinal direction is longer than the length of the holder 10 in a direction in which a groove extends. Therefore, the green-honeycomb molded body 70 is supported with both ends thereof protruded from the holder 10. For this reason, when the green-honeycomb molded body 70 is supported by the conventional holder 10, a terminal end (a portion indicated by an arrow in FIG. 8) of the groove of the holder 10 digs into a side surface of the green-honeycomb molded body 70. As a result, as shown in FIG 9, the side surface has been provided with a damage S in a circumferential direction to make the appearance of the green-honeycomb molded body 70 defective. On the other hand, in a case where the material of the holder is made soft in order to prevent such digging, the shape of the holder 10 is highly deformed when the green-honeycomb molded body 70 is supported, thereby resulting in poor transportability. The transportability herein refers to the shape retention of the holder for supporting the green-honeycomb molded body.

On the other hand, in the holder 1E shown in FIG 6(b), FIG 7(a), and FIG 7(b), the inside-attached section 73 includes a material that is higher in flexibility than the body section 63. Therefore, a terminal end of the groove of the holder 1E is kept from digging into the side surface of the green-honeycomb molded body. Furthermore, the transportability is maintained, because the body section 63 includes a material that is lower in flexibility than the inside-attached section 73. Accordingly, the holder 1E can keep the side surface of the green-honeycomb molded body 70 from being provided with a damage along a circumferential direction, while maintaining the transportability. In addition, in the holder 1E, when the thickness of the inside-attached section 73 is 0.05 to 0.2 times as large as the radius of a circular cross section of the green-honeycomb molded body 70, the effect mentioned above is further produced. Furthermore, when the inside-attached section 73 is composed of a material that is lower in 25% hardness than the body section 63, the effect mentioned above is further produced. Moreover, when inside-attached section 73 includes a material that is lower in impact resilience than the body section 63, the effect mentioned above is further produced.

In the holder 1E, the cavity 65 is collapsed in the vertical direction when the green-honeycomb molded body 70 is supported. More specifically, because the horizontal distance d61 between the both ends of the upper side L62 is longer than the distance b61 between the upper ends of the inside-attached section 73, the upper side L62 is depressed downward, the pairs of slope parts L62a and lateral sides L63 are sloped toward the symmetry axis a61, and the entire cavity 65 is collapsed in the vertical direction. Accordingly, the flexible body section 63 is deformed. More precisely, at the groove 67, the side sections 71 and parts of the curved section 69 are sloped toward the symmetry axis a61, and the entire upper section of the body section 63 is deformed so as to wrap around the side surface of the green-honeycomb molded body 70. In this case, the cross-sectional shape of the cavity 65 has the lower side L61 and upper side L62 at least partially horizontal and parallel to each other, and the wrapping degree is thus not excessive.

This deformation of the entire body section 63 reduces the gap between the inside-attached section 73 and the side surface of the green-honeycomb molded body 70, and the surface of the inside-attached section 73 abuts on the green-honeycomb molded body 70. Then, a repulsion force from the abutting inside-attached section 73 acts against internal stress which attempts to spread the green-honeycomb molded body 70 in the horizontal direction due to the gravity, thereby suppressing the spread of the green-honeycomb molded body 70 in the horizontal direction in a cross section perpendicular to the central axis.

This function narrows the space in which the green-honeycomb molded body 70 can spread in the horizontal direction, when the holder 1E supports the green-honeycomb molded body 70, thus preventing the cross section of the green-honeycomb molded body from being made into an elliptically flattened shape. Accordingly, the holder 1E improves the dimension accuracy of the green-honeycomb molded body 70, as compared with a case in which a holder including no cavity is used.

In addition, in the holder 1E, the groove 67 has the side sections 71, and thus, when the holder 1E supports the green-honeycomb molded body 70 to change the shape of the body section 63, the edges of the groove 67 will not come into contact with the side surface of the green-honeycomb molded body 70. Accordingly, the side surface of the green-honeycomb molded body 70 is prevented from being damaged by contact with edges of the inside-attached section 73.

Furthermore, in the holder 1E, the cavity 65 penetrates through the body section 63 in the direction in which the groove 67 extends, and the cross-sectional shapes of the groove 67 and the cavity 65 are each axisymmetric with respect to the axis a61. Therefore, with the deformation of the entire body section 63, the gap between the inside-attached section 73 and the side surface of the green-honeycomb molded body 70 is evenly reduced over the entire body section 63, and the dimension accuracy of the green-honeycomb molded body 70 is thus improved.

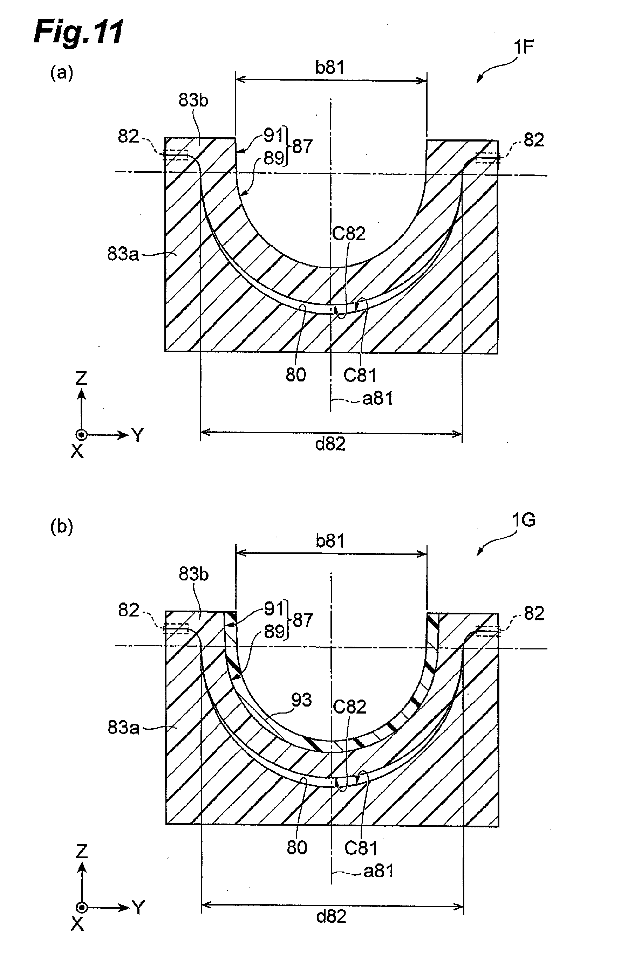

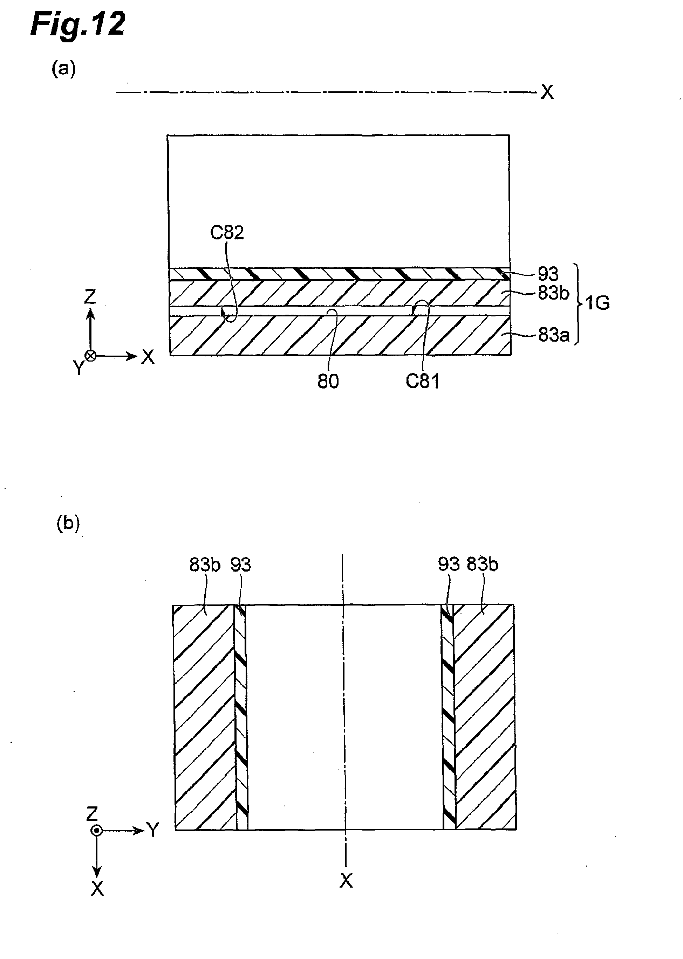

A fifth aspect (a holder 1F and a holder 1G) of the green-honeycomb molded body holder according to the present invention will be described below. The holder 1F shown in FIG. 11(a) is almost the same as the fourth aspect (holder 1D) described above, except for the position and the shape of a cavity 80. The holder 1F achieves substantially the same functions and effects as those of the holder 1D described above. The holder 1G shown in FIG. 11(b), FIG. 12(a), and FIG 12(b) is almost the same as the fourth aspect (holder 1E) described above, except for the position and shape of the cavity 80. Further, the holder 1G achieves substantially the same functions and effects as those of the holder 1E described above. Features that are specific to the fifth aspect (the difference between the fifth aspect and the fourth aspect) will be described below.

In the holder 1F (or the holder 1G), a curved section 89 of a groove 87 is semicircular when viewed from a direction X in which a groove 87 extends. A body section of the holder 1F (or the holder 1G) is composed of a first body section 83a and a second body section 83b. Ends of the first body section 83a parallel to the direction X have contact with ends of the second body section 83b parallel to the direction X at bonded parts 82, with an adhesive interposed therebetween. Hereinafter, the first body section 83a and the second body section 83b bonded are collectively referred to as a "body section". The body section has the cavity 80 formed. In other words, the cavity 80 is located between the first body section 83a and the second body section 83b. The cavity 80 penetrates through the body section in the direction X in which the groove 87 extends. A bottom surface C81 of the cavity 80 and a top surface C82 of the cavity 80, which is opposed to the bottom surface C81 are curved surfaces curved along the entire curved section 89. The cavity 80 is surrounded by only the two curved surfaces of the bottom surface C81 and the top surface C82. The cross section of the cavity 80, which is perpendicular to the direction X in which the groove 87 extends, is substantially crescent or substantially arcuate. The cavity 80 is plane-symmetric with respect to a plane (a plane including an axis a81) bisecting the groove 87 in the direction X in which the groove 87 extends. The width d82 of the bottom surface C81 of the cavity 80 in the horizontal direction (a direction Y horizontal and perpendicular to the direction X) is longer than the width b81 of the groove 87 (or the width b81 of an inside-attached section 93) in the same direction. The thickness of the second body section 83b is substantially uniform in a section in which the curved section 89 is located. In other words, the thickness of the second body section 83b is substantially uniform between the curved section 89 and the top surface C82 of the cavity.

In the holder 1F (or the holder 1 G), as in the fourth aspect, when the green-honeycomb molded body 70 is supported, the cavity 80 is collapsed in the vertical direction to closely attach the entire bottom surface C81 and the top surface C82 of the cavity 80 in a substantially complete manner. Accordingly, the flexible body section 3 is deformed. More precisely, at the groove 87, the side section 91 and the curved section 89 are sloped toward the green-honeycomb molded body 70, and the entire first body section 83a and the second body section 83b wrap around the side surface of the green-honeycomb molded body 70. Then, the entire groove 87 (or the inside-attached section 93) is closely attached to the side surface of the green-honeycomb molded body 70 in a substantially complete manner. Therefore, in the holder 1G, internal stress that acts on the side surface of the green-honeycomb molded body 70 in contact with the groove 87 (or the inside-attached section 93) is dispersed over the entire side surface of the green-honeycomb molded body 70, as compared with a case of the fourth aspect. In other words, in the holder 1G, internal stress is hardly concentrated on a portion of the side surface of the green-honeycomb molded body 70 in contact with the groove 87 (or the inside-attached section 93) as compared with a case of the fourth aspect. As a result, in the holder 1G, the spread of the green-honeycomb molded body 70 in the horizontal direction in a cross section perpendicular to the central axis is prominently suppressed, as compared with a case of the fourth aspect.

In the fifth aspect (the holder 1F or the holder 1G), the factor further suppressing the deformation of the green-honeycomb molded body 70 as compared with the fourth aspect is that the cavity 80 according to the fifth aspect is substantially crescent in cross-section. In addition, in the holder 1F (or the holder 1G), the factor further suppressing the deformation of the green-honeycomb molded body 70 as compared with the fourth aspect is that the thickness of the second body section 83b between the curved section 89 and the top surface C82 of the cavity 80 according to the fifth aspect is substantially uniform, while the thickness of the body section 63 between the curved section 69 and the top surface of the cavity 65 according to the fourth aspect is non-uniform. Due to these factors, in the holder 1F (or the holder 1G), the entire bottom surface C81 and the top surface C82 of the cavity 80 are closely attached in a substantially complete manner to closely attach the entire groove 87 (or the inside-attached section 93) to the side surface of the green-honeycomb molded body 70 in a substantially complete manner. On the other hand, in the fourth aspect, the bottom surface and top surface of the cavity 65 are not closely attached in a substantially complete manner to leave gaps between the both surfaces, and the vicinity of the side section 71 (or the inside-attached section 73 covering the side section 71) is not closely attached to the side surface of the green-honeycomb molded body 70 in a complete manner to leave gaps between the side surface of the green-honeycomb molded body 70 and the groove 67 (or the inside-attached section 73). Because the holder 1F (or holder 1G) differs from the fourth aspect in the respect described above, in the holder 1F (or the holder 1G), internal stress is hardly concentrated on the side surface of the green-honeycomb molded body 70, and the deformation of the green-honeycomb molded body 70 is further suppressed as compared with the fourth aspect. It is to be noted that the internal stress which acts on the green-honeycomb molded body 70 in the fourth aspect and the fifth aspect can be confirmed by simulation or the like based on the finite element method.

When the diameter of a cross section perpendicular to the central axis of the green-honeycomb molded body 70 is 140 to 180 mm before being supported by the groove 87, and when the width b81 of the groove 87 (or the distance b81 between ends of the inside-attached section 93) is 140 to 180 mm before the green-honeycomb molded body 70 comes into contact with the groove 87, the above-mentioned cross section of the green-honeycomb molded body 70 supported by the groove 87 has a roundness on the order of 0.4 mm in the holder 1F (or the holder 1 G). In the fourth aspect, the above-mentioned cross section of the green-honeycomb molded body 70 supported by the groove 67 has a roundness on the order of 0.6 mm. If there is no cavity 65 in the fourth aspect, the above-mentioned cross section of the green-honeycomb molded body 70 supported by the groove 67 has a roundness on the order of 1.9 mm. These roundnesses are measured by experiment of the inventors. It is to be noted that the roundness is measured, for example, on the basis of the American Industrial Standard ASME Y14.5M, and is the difference between the radial distances of the two concentric circles in a case where there are, between the two concentric circles, all of the points on the outer circumference of the cross section of the green-honeycomb molded body supported by the groove, and the difference between the radial distances of the circles reaches a minimum.

The first body section 83a and the second body section 83b of the holder 1F (or the holder 1G) may have the same material, composition, 25% hardness, and impact resilience as those of the body section 3 of the holder 1E. The inside-attached section 93 of the holder 1G may have the same material, composition, 25% hardness, and impact resilience as those of the inside-attached section 73 of the holder 1E. However, it is preferable that the 25% hardness of the first body section 83a and the second body section 83b of the holder 1G be 150 N or more, or 200 N or more. It is preferable that the 25% hardness of the inside-attached section 93 of the holder 1G be 50 N or less. Furthermore, it is preferable that the impact resilience of the first body section 83 a and the second body section 83b of the holder 1G be 30% or more. It is preferable that the impact resilience 93 of the inside-attached section 93 of the holder 1G be 20% or less. The holder 1 G meets these conditions, thereby making the deformation of the green-honeycomb molded body 70 more likely to be suppressed.

### [Method for Producing Diesel particulate Filter]

### (Step of Preparing Raw Material Mixture)

A ceramic raw material powder, an organic binder and additives, etc. are mixed with the use of a kneader or the like to prepare a raw material mixture.

Examples of the ceramic raw material powder include oxides such as alumina, silica, mullite, cordierite, glass and aluminum titanate, silicon carbide, and silicon nitride. It is to be noted that the aluminum titanate can further contain magnesium and/or silicon. The ceramic raw material powder is not limited to these.

In the case of producing a diesel particulate filter comprising aluminum titanate or aluminum magnesium titanate, the raw material powder includes an aluminum source powder such as an α aluminum powder, and a titanium source powder such as an anatase-type or rutile type titania powder. The raw material powder can further include, if necessary, a magnesium source powder such as a magnesia powder or a magnesia spinel powder, and/or a silicon source powder such as a silicon oxide powder or glass frit.

Examples of the organic binder include celluloses such as methyl cellulose, carboxymethyl cellulose, hydroxyalkylmethyl cellulose, and sodium carboxymethyl cellulose; alcohols such as polyvinyl alcohols; and lignin sulfate.

Examples of the additives include, for example, pore forming agents, lubricants and plasticizers, dispersants, and solvents.

The pore forming agents include carbon materials such as graphite; resins such as polyethylene, polypropylene, and polymethylmethacrylate; vegetative materials such as starch, nut shells, walnut shells, and corns; ice; and dry ice.

Example of the lubricants and plasticizers include alcohols such as glycerin; higher fatty acids such as caprylic acid, lauric acid, palmitic acid, arachidic acid, oleic acid, and stearic acid; metal stearates such as aluminum stearates; and polyoxyalkylenealkylether (POAAE).

Example of the dispersants include, for example, inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate.

As the solvent, alcohols and water, etc. can be used. For example, monohydroxy alcohols such as methanol, ethanol, butanol, and propanol; and dihydroxy alcohols such as propylene glycol, polypropylene glycol, and ethylene glycol can be used as the alcohols.

### (Step of Molding Raw Material Mixture)

The raw material mixture described above is extruded horizontally from a die of an extruder to form a long cylindrical body. The die has openings in the form of a lattice, and the cylindrical body thus has a plurality of through holes formed, which extend in the longer direction. It is to be noted the raw material mixture may be kneaded in the extruder. The cylindrical body extruded from the extruder is supported by the holder (the holder 1A, 1B, 1C, 1D, 1E, 1F, or 1G described above). More precisely, a lower side surface of the cylindrical body is partially supported by the groove of the holder. The cylindrical body is cut perpendicular to the longitudinal direction of the body to form a green-honeycomb molded body 70 supported by the holder. The green-honeycomb molded body supported by the holder is transferred to a drying machine along with the holder. During the transfer, the green-honeycomb molded body may be moved from the holder to a transfer plate to transfer the green-honeycomb molded body placed on the transfer plate. The transferred green-honeycomb molded body 70 is dried with hot air, a microwave, or the like to remove the solvent. Furthermore, a cutting step may be carried out for accurately adjusting the dimensions of the green-honeycomb molded body 70. In addition, the cut green-honeycomb molded body 70 may be subjected to dust removal.

### (Closing Step)

In the closing step, a first mask is attached to a first end surface of the green-honeycomb molded body 70, on which side openings of a plurality of through holes 70a are located. In the first mask, mask parts and a plurality of opening parts which have substantially the same dimensions as the through holes 70a are located in a staggered arrangement. The first mask is attached to the first end surface of the green-honeycomb molded body 70 so that the respective through holes 70a overlap with the respective mask parts and the opening parts. In addition, a second mask is attached to a second end surface of the green-honeycomb molded body 70, on the side opposite to the first end surface. The positional relationship between opening parts and mask parts which the second mask has is precisely opposite to the first mask. Therefore, the through holes 70a blocked with the mask parts of the first mask at the first end surface overlap with the opening parts of the second mask at the second end surface. The through holes 70a blocked with the mask parts of the second mask at the second end surface overlap with the opening parts of the first mask at the first end surface. Accordingly, the plurality of through holes 70a formed in the green-honeycomb molded body 70 are each open at either the first end surface or the second end surface, and blocked with the mask parts at the other end surface.

In the closing step for the first end surface, the plugging material mentioned above is introduced into the opening (ends) of the respective through holes 70a which overlap with the opening parts of the first mask. It is to be noted that the whole of the green-honeycomb molded body 70 may be vibrated with a vibrator after introducing the closing material into the through holes 70a. This makes it easier to fill gaps at the ends of the through holes 70a with the closing material in every hole and corner. Substantially the same as the raw material mixture described above may be used as the plugging material.

After the closing step for the first end surface as just described, the closing step for the second end surface with the second mask attached thereto is carried out in the same way at the closing step for the first end surface. After applying the closing steps to the both end surfaces, the respective masks are peeled from the respective end surfaces.

### (Calcination Step and Firing Step for Green-Honeycomb Molded Body 70)

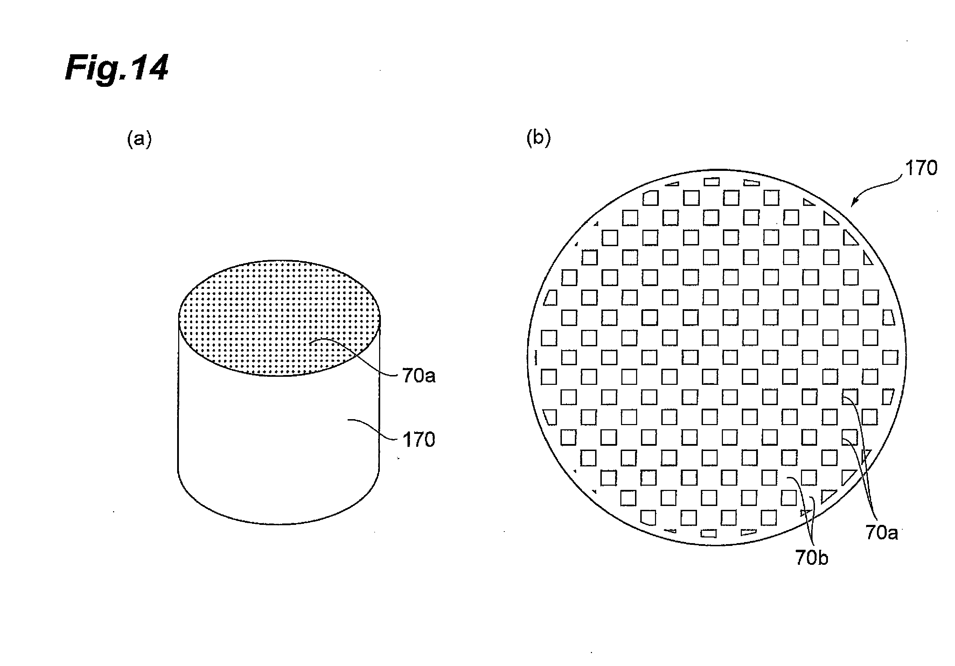

After the closing steps, the green-honeycomb molded body 70 is subjected to calcination (degreasing) and firing. The steps described above can provide a diesel particulate filter 170 of porous ceramic (see FIG. 14).

The calcination (degreasing) is a step for removing, through burning out, decomposition, or the like, the organic binder in the green-honeycomb molded body 70, and the organic additives blended, if necessary. The calcination step corresponds to an initial stage of the firing step, that is, a temperature rising stage (for example, a temperature range of 300 to 900°C) before the green-honeycomb molded body 70 reaches the firing temperature. In the calcination (degreasing) step, it is preferable to minimize the rate of temperature rise as much as possible.

The firing temperature for the green-honeycomb molded body 70 may be preferably 1300°C or higher, and more preferably 1400°C or higher. In addition, the firing temperature is preferably 1650°C or lower, and more preferably 1550°C or lower. The rate of temperature rise up to the firing temperature is not to be considered particularly limited, but typically 1°C/hour to 500°C/hour.

The firing is typically carried out in the atmospheric air. Depending on the types or usage ratios of the raw material powders used, that is, the aluminum source powder, titanium source powder, magnesium source powder, and silicon source powder, the firing may be carried out in an inert gas such as a nitrogen gas or an argon gas, or the firing may be carried out in a reducing gas such as a carbon monoxide gas or a hydrogen gas. Alternatively, the firing may be carried out in an atmosphere with a water vapor partial pressure reduced.

The firing is typically carried out with the use of a typical firing furnace such as a tubular electric furnace, a box electric furnace, a tunnel furnace, a far-infrared furnace, a microwave heating furnace, a shaft furnace, a reverberatory furnace, a rotary furnace, or a roller hearth furnace. The firing may be carried out in a batch-wise manner, or may be carried out in a continuous manner. In addition, the firing may be carried out in a static manner, or may be carried out in a fluid manner.

The time required for the firing varies depending on the composition and amount of the raw material powder constituting the green-honeycomb molded body 70, the type of the firing furnace, the firing temperature, the firing atmosphere, etc., but may be 10 minutes to 24 hours.

The calcination and the firing may be carried out individually. In the calcination step, the green-honeycomb molded body 70 may be heated at a temperature that is equal to or higher than the decomposition temperatures of the organic binder and other organic additives, and lower than the sintering temperature of the inorganic compound powder. In the firing step, the honeycomb molded body subjected to the calcination step may be heated at a temperature that is equal to or higher than the sintering temperature of the raw material powder.

### [Diesel Particulate Filter]

In the diesel particulate filter 170, the through holes 70a blocked with plugging parts 70b at the first end surface have openings at the second end surface. The through holes 70a blocked with plugging parts 70b at the second end surface have openings at the first end surface (see FIG. 14). Platinum metal catalysts supported on a support such as aluminum, and auxiliary catalysts such as ceria and zirconia may be attached to the partition wall surface of the through holes 70a.

The dimensions of the diesel particulate filter 170 are not limited. The inside diameter (the length of a side of the square) of a cross section perpendicular to the longitudinal direction of the through holes 70a is, for example, 0.5 to 2.5 mm. The length of the diesel particulate filter in the direction in which the through holes 70a extend is, for example, 30 to 350 mm. In addition, the outside diameter of the diesel particulate filter is, for example, 10 to 320 mm. The number (cell density) of through holes 70a that are open to the end surface of the diesel particulate filter is, for example, 150 to 450 cpsi. It is to be noted that the unit of cpsi means "/inch²", which is equal to "/(0.0254 m)²". The thickness of the partition wall of the through hole 70a is, for example, 0.1 to 0.76 mm. The porosity (open porosity) of the partition wall 70c is, for example, 30 to 70 volume%.

While the preferred embodiment of the present invention has been described above, the present invention is not to be considered limited to the embodiment described above in any way. For example, for example, the cross-sectional shape of the cavity may be other shape, as long as the clearance is decreased with the deformation of the body section when the groove supports the green-honeycomb molded body. Furthermore, the materials which can be used as the body section and the inside-attached section are not limited to those listed in Tables 1 and 2. The first aspect (the holder 1A in FIG. 1), the second aspect (the holder 1B in FIG 4), and the third aspect (the holder 1C in FIG 5) may be each provided with an inside-attached section.

The diesel particulate filter may be a porous ceramic of cordierite, silicon carbide, or the like. In this case, cordierite or silicon carbide, or a mixture thereof may be used as the raw material powder. The cross-sectional shape of the through hole is not limited to the square, but may be rectangular, circular, elliptical, triangle, hexagonal, octagonal, or the like. Multiple types of through holes which differ from each other in cross-sectional shape and dimension may be formed in the diesel particulate filter. The interval between the through holes or the arrangement of the through holes is also not particularly limited.

### Examples

### <Support for Green-Honeycomb Molded Body>

### (Example 1)

A green-honeycomb molded body continuously extruded from an extruder of 153 mm in cap inner diameter at an outlet port of the extruder was supported by the holder shown in FIG 1, and cut with a cut length of 240 mm set. Thirty-two green-honeycomb molded bodies in total were supported by the holder. The dimensions of the holder are: b3 = 155 mm; b4 = 67.5 mm; b5 = 290 mm; b6 = 145 mm; b7 = 155 mm; b8 = 45 mm; b9 = 77.5 mm; d1 = 200 mm; d2 = 130 mm; d3 = 35 mm; d4 = 45 mm; d5 = 50 mm; d6 = 25 mm; d7 = 25 mm; and d8 = 25 mm, and the material of the holder is polyurethane.

### (Comparative Example 1)

A green-honeycomb molded body continuously extruded from an extruder of 153 mm in cap inner diameter at an outlet port of the extruder was supported by the holder shown in FIG. 2, and cut with a cut length of 240 mm set. Twenty green-honeycomb molded bodies in total were supported by the holder. The material of the holder is the same as used in Example 1. The dimensions of the holder were: b3 = 155 mm; b4 = 67.5 mm; b5 = 290 mm; b7 = 155 mm; and b9 = 77.5 mm.

### <Measurement of Dimensions>

In Example 1 and Comparative Example 1, various dimensions of the green-honeycomb molded bodies supported by the holders were measured. In this case, the vertical diameter when the green-honeycomb molded body was viewed from the longitudinal direction (the vertical diameter of the end surface of the green-honeycomb molded body) was regarded as a "height dimension". The horizontal diameter when the green-honeycomb molded body was viewed from the longitudinal direction (the horizontal diameter of the end surface of the green-honeycomb molded body) was regarded as a "width dimension". Furthermore, the position of one end of the diameter as the width dimension was regarded as a position of 0°, through the rotation of the side surface of the green-honeycomb molded body downward from the position, the position as the vertically lowermost part was regarded as a position of 90°, through the rotation of the side surface upward from the position, the position exactly opposite to the position of 0° was regarded as a position of 180°, and through the further rotation of the side surface upward from the position, the position as the uppermost part of the side surface was regarded as a position of 270°. In this case, the diameter connecting from the position corresponding to 45° to the position corresponding to 225° was regarded as a "diagonal dimension".

For the 9-th to 32-th green-honeycomb molded bodies in Example 1 and the 9-th to 20-th green-honeycomb molded bodies in Comparative Example 1, the average values for the respective diameters mentioned above were figured out after a lapse of approximately 2 minutes after the extrusion. In addition, the maximum value and the average value were figured out for the difference between the height dimension and the width dimension. These results are shown in Table 3.

**[Table 3]**

| | | Unit | Example 1 | Comparative Example 1 |
|---|---|---|---|---|
| Covering Diameter | | mmϕ | 153 | 153 |
| Height Dimension | (90°-270°) | mm | 154.40 | 153.63 |
| Width Dimension | (0°-180°) | mm | 154.00 | 155.00 |
| Diagonal Dimension | (45°-225°) | mm | 154.41 | 154.21 |
| Difference between Height Dimension and Width Dimension | Maximum | mm-abs. | 0.60 | 1.86 |
| | Average | mm-abs. | 0.40 | 1.37 |

### <Result>

From the data shown in Table 3, it has been determined that the height dimension, width dimension, and diagonal dimension of the green-honeycomb molded body supported have values close to each other, which means that the cross-sectional shape is a shape closer to a perfect circle in Example 1, as compared with Comparative Example 1. In addition, it has been also determined that the variation in dimension is small among the respective lots. More specifically, it has been determined that the use of the holder shaped as shown in FIG. 1 has suppressed the decrease in the dimension accuracy of the green-honeycomb molded body, as compared with conventional holders.

### <Other Experiments>

### (Example 2)

A green-honeycomb molded body continuously extruded from an extruder of 163 mm in cap inner diameter at an outlet port of the extruder was supported by the holder shown in FIG. 1, and cut with a cut length of 300 mm set. Seventy-five green-honeycomb molded bodies in total were supported by the holder. The dimensions of the holder are: b3 = 164 mm; b4 = 63 mm; b5 = 290 mm; b6 = 145 mm; b7 = 155 mm; b8 = 30 mm; b9 = 73 mm; d1 = 200 mm; d2 = 130 mm; d3 = 35 mm; d4 = 45 mm; d5 = 45 mm; d6 = 25 mm; d7 = 25 mm; and d8 = 10 mm, and the material of the holder is polyurethane.

### (Comparative Example 2)

A green-honeycomb molded body continuously extruded from an extruder of 166 mm in cap inner diameter at an outlet port of the extruder was supported by the holder shown in FIG 2, and cut with a cut length of 220 mm set. Eighty green-honeycomb molded bodies in total were supported by the holder. The material of the holder is the same as used in Example 2. The dimensions of the holder were: b3 = 167 mm; b4 = 61.5 mm; b5 = 290 mm; b7 = 152 mm; and b9 = 68.5 mm.

### <Measurement of Dimensions>

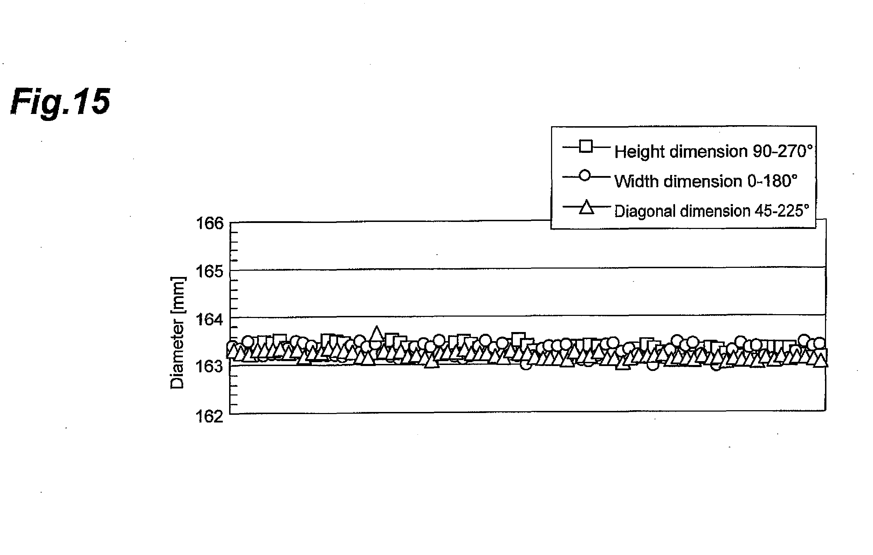

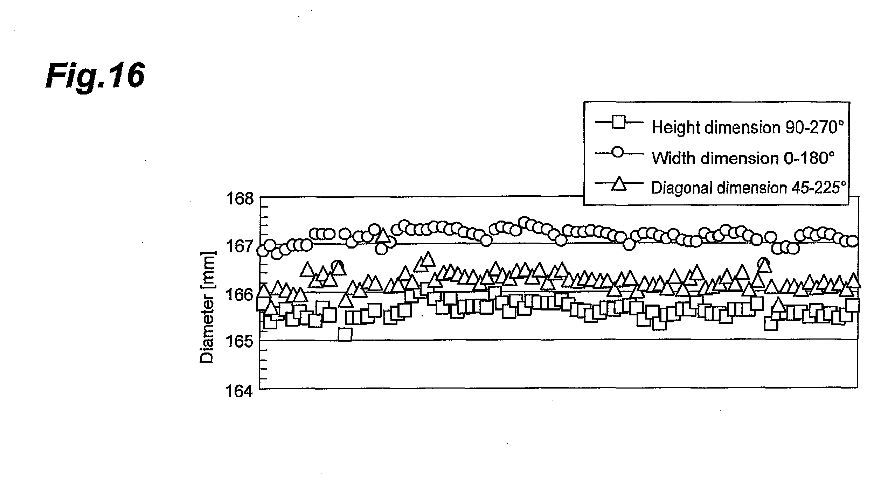

In Example 2 and Comparative Example 2, various dimensions of the green-honeycomb molded bodies supported by the holders were measured. The measurement results for Example 2 are shown in FIG 15, whereas the measurement results for Comparative Example 2 are shown in FIG 16. The definitions of the "height dimension", "width dimension", and "diagonal dimension" are the same as those in Example 1 and Comparative Example 1.

### <Result>

From the graphs in FIGS. 15 and 16, it has been determined that the height dimension, width dimension, and diagonal dimension of the green-honeycomb molded body supported have values close to each other, which means that the cross-sectional shape is a shape closer to a perfect circle in Example 2, as compared with Comparative Example 2. In addition, it has been also determined that the variation in dimension is small among the respective lots. More specifically, it has been determined that the use of the holder shaped as shown in FIG 1 has suppressed the decrease in the dimension accuracy of the green-honeycomb molded body, as compared with conventional holders.

### (Example 3)

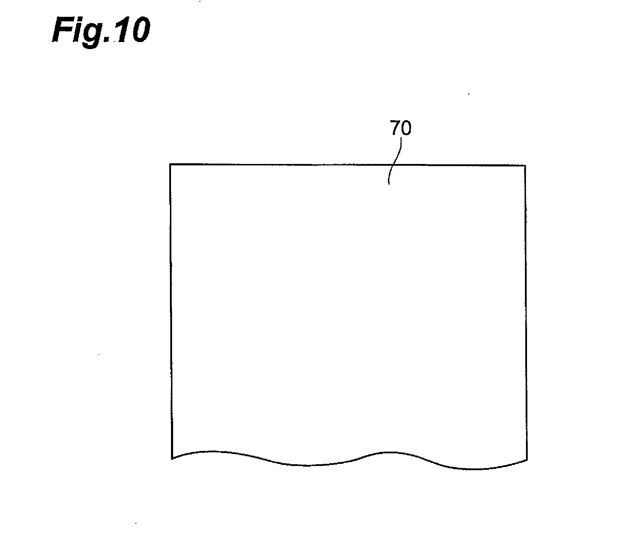

Example 3 of the present invention will be described below. The material of No. 9 in Table 1 was used as the body section 63, whereas the material of No. 17 in Table 2 was used as the inside-attached section 73, thereby constituting the holder 1E shown in FIG. 6(b). When the green-honeycomb molded body 70 was supported by this holder 1E for approximately 8 minutes, the side surface of the green-honeycomb molded body 70 was not damaged as shown in FIG 10.

### Industrial Applicability

According to the present invention, it is possible to produce a green-honeycomb molded body and a diesel particulate filter which are high in dimension accuracy.

### Reference Signs List

1A, 1B, 1C, 1D, 1E, 1F, 1G --- holder according to the present invention; 10, 100 --- conventional holder; 3, 13, 23, 63 --- body section; 83a --- first body section; 83b --- second body section; 5, 15, 25, 65, 80 --- cavity; 82 --- bonded part; 7, 17, 27, 47, 67, 87 --- groove; 9, 69, 89 --- curved section; 11, 71, 91 --- side section; 73, 93inside-attached section; 70 --- green-honeycomb molded body; 70athrough hole; 70b --- plugging part; 70c --- partition wall; 170 --- diesel particulate filter; a1, a2, a3, a61, a81 --- symmetry axis; b3, b13, b23groove width; b61, b81 --- groove width, or distance between upper ends of inside-attached section; C81 --- bottom surface; C82 --- top surface; L1, L11, L21, L61 --- lower side; L2, L12, L22, L62 --- upper side; L2a, L62a --- slope part; L22a, L22b, L22d --- downward slope part; L22c --- upward slope part; L63 --- lateral side.

## Claims

1. A green-honeycomb molded body holder for supporting a side surface of an extruded cylindrical green-honeycomb molded body with a longitudinal direction of the green-honeycomb molded body horizontal,
the holder comprising a flexible body section,
wherein the body section has, in an upper section of the body section, a groove that supports the side surface of the green-honeycomb molded body, and
a cavity is formed below the groove of the body section.

2. The green-honeycomb molded body holder according to Claim 1,
wherein the groove has a curved section on which a lower half side surface of the green-honeycomb molded body abuts, and a pair of side sections that extend upward from both edges of the curved section.

3. The green-honeycomb molded body holder according to Claim 1 or 2,
wherein the cavity penetrates through the body section in a direction in which the groove extends,
cross-sectional shapes of the groove and of the cavity in a vertical plane orthogonal to the direction in which the groove and the cavity extend are axisymmetric with respect to a vertical symmetry axis common to both the groove and the cavity,
the cross-sectional shape of the cavity in the vertical plane has
a pair of sides at least partially horizontal and parallel to each other,
at least an upper side of the pair of sides has slope parts sloped upward on both aspects of the upper side, and
a horizontal distance between both ends of the upper side is longer than a width of the groove in the vertical plane.

4. The green-honeycomb molded body holder according to Claim 1 or 2,
wherein the cavity penetrates through the body section in a direction in which the groove extends,
cross-sectional shapes of the groove and of the cavity in a vertical plane orthogonal to the direction in which the groove and the cavity extend are axisymmetric with respect to a vertical symmetry axis common to both the groove and the cavity,
the cross-sectional shape of the cavity in the vertical plane is
a shape comprising lines at least following vertexes of an imaginary trapezoidal shape with an upper side shorter than a lower side, and a length of the lower side equal to or smaller than a width of the groove in the vertical plane, and
among the lines, the line following the vertexes on the upper side aspect
intersects the symmetry axis in a position below positions of the vertexes on the upper side aspect, and
comprises a slope part sloped downward from the vertex aspect toward the symmetry axis aspect.

5. The green-honeycomb molded body holder according to Claim 1 or 2,
wherein the cavity penetrates through the body section in a direction in which the groove extends,
cross-sectional shapes of the groove and of the cavity in a vertical plane orthogonal to the direction in which the groove and the cavity extend are axisymmetric with respect to a vertical symmetry axis common to both the groove and the cavity,
the cross-sectional shape of the cavity in the vertical plane is
a shape comprising lines at least following vertexes of an imaginary rectangle shape, with lengths of an upper side and of a lower side in a horizontal direction longer than a width of the groove in the vertical plane, and
among the lines, the line following the vertexes on the upper side aspect
intersects the symmetry axis in a position below positions of the vertexes on the upper side aspect, and
comprises: two or more pairs of downward slope parts sloped downward from the vertex aspect toward the symmetry axis aspect; and an upward slope part sloped upward from the vertex aspect toward the symmetry axis aspect between the downward slope parts.

6. The green-honeycomb molded body holder according to Claim 2,
wherein the curved section of the groove is semicircular when viewed from the direction in which the groove extends,
the cavity is located below the entire curved section, and penetrates through the body section in the direction in which the groove extends,
the cavity is surrounded by a horizontal bottom surface, a top surface opposed to the bottom surface, and a pair of vertical side surfaces opposed, and
at the top surface, both ends parallel to the direction in which the groove extends are bent toward the curved section.

7. The green-honeycomb molded body holder according to Claim 2,
wherein the curved section of the groove is semicircular when viewed from the direction in which the groove extends,
the cavity penetrates through the body section in the direction in which the groove extends,
a bottom surface of the cavity and a top surface of the cavity, the top surface opposed to the bottom surface, are curved surfaces curved along the entire curved section, and
the cavity is surrounded by only the two curved surfaces of the bottom surface and the top surface.

8. The green-honeycomb molded body holder according to Claim 7,
wherein a thickness of the body section is uniform between the curved section and the top surface.

9. The green-honeycomb molded body holder according to any one of Claims 1 to 8,
the holder comprising a flexible inside-attached section covering a surface of the groove,
wherein the inside-attached section includes a material that is higher in flexibility than the body section, and
the groove supports the side surface of the green-honeycomb molded body via the inside-attached section.

10. The green-honeycomb molded body holder according to Claim 9,
wherein a thickness of the inside-attached section is 0.05 to 0.2 times as large as a radius of a circular cross section of the green-honeycomb molded body.

11. The green-honeycomb molded body holder according to Claim 9 or 10,
wherein the inside-attached section includes a material that is lower in hardness than the body section.

12. The green-honeycomb molded body holder according to any one of Claims 9 to 11,
wherein the inside-attached section includes a material that is lower in impact resilience than the body section.

13. A method for producing a diesel particulate filter, comprising:
a step of forming a long cylindrical body by extruding a mixture containing a ceramic raw material powder in a horizontal direction from an extruder;
a step of supporting a lower side surface of the cylindrical body by the groove of the green-honeycomb molded body holder according to any one of Claims 1 to 12, and cutting the cylindrical body perpendicular to a longitudinal direction of the cylindrical body to form the green-honeycomb molded body supported by the green-honeycomb molded body holder; and
a step of transferring the green-honeycomb molded body supported by the green-honeycomb molded body holder, along with the green-honeycomb molded body holder.
